# EUROPEAN PATENT SPECIFICATION

(11) **EP 2 019 233 B1**
(45) Date of publication and mention of the grant of the patent: **20.01.2010**
(21) Application number: 08156632.5
(22) Date of filing: 21.05.2008
(51) Int. Cl.: F16H 57/02, B62M 9/08

(54) **Power unit**
Triebwerk
Bloc d'alimentation

(30) Priority: 26.07.2007 JP 2007194964; 26.07.2007 JP 2007194965; 26.07.2007 JP 2007194966
(43) Date of publication of application: 28.01.2009
(73) Proprietor: Honda Motor Co., Ltd., Tokyo 107-8556 (JP)
(72) Inventor: Hibiya, Junsei, Saitama 351-0193 (JP); Kakemizu, Kenichiro, Saitama 351-0193 (JP); Watanabe, Satoru, Saitama 351-0193 (JP); Ishikawa, Hideo, Saitama 351-0193 (JP); Ikeda, Naoki, Saitama 351-0193 (JP); Hatayama, Atsushi, Saitama 351-0193 (JP)
(74) Representative: Rupp, Christian

(56) References cited:
- EP-A- 1 722 132
- JP-A- 2002 019 668
- US-A1- 2005 239 591

## Description

The present invention relates to a transmission case cover which covers a belt type continuously variable transmission in a power unit including an internal combustion engine and the belt type continuously variable transmission.

A power unit has already been proposed that employs a configuration in which a centrifugal clutch is coaxially provided on a driven shaft which rotatably carries a driven pulley of a belt type continuously variable transmission and rotation of the driven pulley is transmitted to the driven shaft via the centrifugal clutch (see e.g. Japanese Patent No. 3532885, herein after referred to as Patent Document 1).

In Patent Document 1, which forms the preamble of claim 1, a centrifugal clutch is disposed at the shaft end of a driven shaft and a transmission case cover which laterally covers a belt type continuously variable transmission provided on the side of a transmission case is formed in a rear portion with a dome wall which protrudes like a dome to house the centrifugal clutch.

Since the transmission case cover is formed with the dome wall in the rear portion, it is probable that vibration is amplified due to resonance relative to the vibration specific to a dome, which will cause noise.
In the transmission case cover disclosed in Patent Document 1, the dome is formed with slight asperities on the inner surface in the drawing (Fig. 4 of Document 1). It is desired to further effectively prevent resonance to suppress vibration.

The present invention has been made in view of the foregoing and it is an object of the present invention to provide a transmission case cover of a power unit that can suppress the vibration of a dome wall formed in the rear portion thereof.

Moreover, an embodiment of the invention shows a wiring structure for said power unit swingably provided in a motorcycle.

A swing type power unit swingably provided in a motorcycle is provided in a rear portion with a sensor for detecting the wheel-speed of a rear wheel rotated by the power transmitted rearward via a power transmission mechanism and with other auxiliaries (see e.g. Japanese Patent Laid-open No. Hei 8-133154, herein after referred to as Patent Document 2).

For the power unit disclosed in Patent Document 2, a wheel-speed sensor for detecting the rotational speed of a rear wheel provided at a rear axle journaled by the rear portion of a swing arm of the power unit is provided close to a tooth-portion of a sensor ring rotated integrally with the rear wheel.

Signal lines extending from such sensors have to be wired to a control board mounted on the vehicle body side. The power unit is mounted at the rear portion thereof so as to be swingable up and down around the front portion thereof. The signal lines extending from the sensors attached to the rear portion of the power unit extend to the swing proximal end of the front portion of the power unit and are wired from the swing proximal end with a small motion to the vehicle-body side control board.

In the power unit disclosed in Patent Document 2 mentioned above, the wheel-speed sensor is attached to a support stay so as to be exposed to the outside. This support stay is provided at the rear end of a swing arm so as to extend rearward. Although not disclosed, the wiring of the signal line extending from the wheel-speed sensor is generally extended along the external upper surface of a unit case toward the forward swing proximal end side because the wheel-speed sensor is already exposed to the outside.

Thus, since the wiring can easily be viewed from the outside, external appearance is poor and protection against the influence of water and dust has to be taken into account.
Further, if it is intended to reliably secure the wiring to the unit case, a retainer is needed. In particular, if several signal lines are bundled for wiring, the retainer is enlarged. The enlarged retainer is exposed to further impair the external appearance.

A further embodiment of the invention shows a breather structure for a speed reduction chamber of the power unit swingably provided in a motorcycle.

A swing type power unit swingably provided in a motorcycle is such that power transmitted to a rear portion of the power unit via a transmission mechanism is transmitted to a rear wheel via a speed reduction mechanism.
The power unit is formed in a rear portion with a speed reduction chamber which is partitioned from a transmission chamber housing the transmission mechanism to house the speed reduction mechanism.

Various breather structures for the speed reduction chamber have been proposed. Each of the breather structures is such that a breather pipe extending from the speed reduction chamber extends inside a transmission chamber and has a tip opening located at a hole that is provided at a position suitable to communicate with the outside (see e.g. Japanese Patent Laid-open No. 2001-355424, herein after referred to as Patent Document 3).

In the power unit disclosed in Patent Document 3, the breather pipe extending from the speed reduction chamber into the transmission chamber is guided by a guide groove formed in the inner surface of a transmission case to extend toward a left cover (an inner cover) of the transmission case and allows the tip opening to face a circular hole bored in the left cover.

Thus, the breather pipe has to be arranged along the inner surface of the transmission case. In addition, when the left cover is assembled to the transmission case, the tip opening of the breather pipe extending from the inner side of the transmission case has to face the circular hole bored in the left cover. This makes the attachment work of the breather pipe hard and cumbersome.

To achieve the above object, the invention recited in claim 1 is that in a transmission case cover of a power unit for a motorcycle in which a belt type continuously variable transmission is provided laterally of a transmission case, that is between a portion of a transmission case and the transmission case cover, extending rearward and also serving as or better having a crankcase rotatably journaling a crankshaft of an internal combustion engine and the transmission case cover is put on the transmission case from a side to cover the portion of the transmission case from a front drive pulley to a rear driven pulley of the belt type continuously variable transmission to form a speed-change chamber, and in which a centrifugal clutch is rotatably carried by a driven shaft axially outwardly of the driven pulley rotatably carried by the driven shaft, and the transmission case cover is formed in a rear portion thereof with a dome wall which protrudes like a dome (externally of a vehicle) so as to house the centrifugal clutch, external ribs and internal ribs are projectingly formed on the external surface and internal surface, respectively, of the dome wall to extend in an approximately radial manner with an apex of the dome wall taken as a center.

The invention recited in claim 2 is characterized in that in the power unit according to claim 1, the external ribs and the internal ribs are formed not to overlap each other as viewed from the side.

The invention recited in claim 3 is characterized in that in the power unit according to claim 1 or 2, the external ribs are formed approximately parallel to a plane containing a drive shaft and the driven shaft of the belt type continuously variable transmission.

The invention recited in claim 4 is characterized in that in the power unit according to any one of claims 1 to 3, each external rib is formed in a U-shape where a pair of approximately parallel sides extend in a centrifugal direction, i.e. a radial direction, with the apex of the dome wall taken as a center and bend at tips to join together; and respective proximal ends of adjacent U-shaped external ribs join together, thus, the plurality of external ribs forms a single closed loop.

The invention recited in claim 5 is characterized in that in the power unit according to claim 4, three of the U-shaped external ribs are projectingly formed so that adjacent U-shaped external ribs have an angle of about 120 degrees; and one of the three U-shaped external ribs has a pair of sides that are approximately parallel to the plane containing the drive shaft and driven shaft of the belt type continuously variable transmission and are equally spaced apart from the plane.

The invention recited in claim 6 is characterized in that in the power unit according to any one of claims 1 to 6, further comprising a wiring structure for said power unit swingably provided in a motorcycle, clamps are attached to an external surface of the transmission case cover, lead wires extending from auxiliaries are held by the clamps, and the clamps and the lead wires held by the respective clamps are covered by a side-cover laterally put on the transmission case cover.

The invention recited in claim 7 is characterized in that in the power unit according to claim 6, the transmission case cover which covers the belt type continuously variable transmission has respective portions which corresponds to a drive pulley and a driven pulley of the belt type continuously variable transmission and which outwardly protrude to form a front protruding portion and the dome wall which is a rear protruding portion, and the clamps are attached to a flat connection portion between the front protruding portion and rear protruding portion (i.e. the dome wall) of the transmission case cover.

The invention recited in claim 8 is characterized in that in the power unit according to claim 6 or 7, a projection which prevents turning of the clamp is formed to project from a periphery of a clamp attachment portion of the transmission case cover to which the clamp is attached so that the lead wire is held to face the back and forth direction.

According to the transmission case cover of the power unit recited in claim 1, the external ribs and internal ribs are projectingly formed on the external surface and internal surface, respectively, of the dome wall. Therefore, the synergetic effect of the external ribs and internal ribs allows the smaller number of the ribs to increase the rigidity of the dome wall, thereby suppressing vibration. Further, the external ribs and internal ribs are formed to extend in an approximately radial manner with the apex of the dome wall taken as the center. Therefore, the resonance can further be suppressed to further suppress the vibration, thereby suppressing the occurrence of noise.

According to the transmission case cover of the power unit recited in claim 2, since the external ribs and internal ribs are formed not to overlap each other as viewed from the side, the dome wall can be sectioned more finely by the small number of the ribs to efficiently ensure rigidity.

According to the transmission case cover of the power unit recited in claim 3, the external ribs are formed approximately parallel to the plane containing the drive shaft and driven shaft of the belt type continuously variable transmission. Thus, the anteroposterior rigidity can be increased to more effectively suppress the anteroposterior vibration resulting from the rotation of the belt.

According to the transmission case cover of the power unit recited in claim 4, the external rib is formed in a U-shape where a pair of approximately parallel sides extend in a centrifugal direction with the apex of the dome wall taken as the center and bend at tips to join together and respective proximal ends of adjacent U-shaped external ribs join together. Thus, the plurality of external ribs form a single closed loop, so that even the small number of the ribs can effectively increase the rigidity of the dome wall.

According to the transmission case cover of the power unit recited in claim 5, three of the U-shaped external ribs are projectingly formed so that adjacent U-shaped external ribs have an angle of about 120 degrees, and one of the three U-shaped external ribs has a pair of sides that are approximately parallel to the plane containing the drive shaft and driven shaft of the belt type continuously variable transmission and are equally spaced apart from the plane. Thus, the smaller number of the ribs can efficiently increase the rigidity of the entire dome wall and particularly increase the anteroposterior rigidity of the dome wall of the transmission case cover. In addition, the anteroposterior vibration resulting from the rotation of the belt of the belt type continuously variable transmission can effectively be suppressed.

According to the wiring structure for the power unit recited in claim 6, the clamps are attached to the external surface of the transmission case cover and the lead wires such as signal lines of auxiliaries are held by the clamps. Thus, the lead wired can reliably be secured and held.
The clamps and the lead wires held by the clamps are covered by the side-cover laterally put on the transmission case cover and therefore they are hidden to be invisible from the outside. Thus, external appearance can be kept satisfactory and it is not necessary to take into particular account the influence of water, dust and other disturbances.
Incidentally, the auxiliaries include various detection sensors.

According to the wiring structure for the power unit according to claim 7, the clamps are attached to the flat connection portion between the front and rear protruding portions of the transmission case cover. Thus, the clamps attached will not project in the vehicle-width direction from the front and rear protruding portions, which keeps the external appearance further satisfactory.

According to the wiring structure for the power unit according to claim 8, the projection which prevents turning of the clamp is formed to project from the periphery of the clamp attachment portion of the transmission case cover to which the clamp is attached so that the lead wire is held to face the back and forth direction. Thus, the lock of the clamp can be formed with a simple construction and since the lead wire is allowed to face the back and forth direction, the length of the lead wire can be reduced as much as possible.
Fig. 1 is a lateral view of a scooter-type motorcycle on which a power unit according to an embodiment of the present invention is mounted.
Fig. 2 is an external, left lateral view of the power unit.
Fig. 3 is a left lateral view of the power unit with a front side-cover and a rear side-cover which constitute a left-side external cover being removed.
Fig. 4 is a left lateral view of the power unit with a transmission case cover further removed.
Fig. 5 is a partially omitted right lateral view of the power unit with a reduction gear cover removed.
Fig. 6 is a developed cross-sectional view taken along line VI-VI of Fig. 2.
Fig. 7 is a partial enlarged view of Fig. 6.
Fig. 8 is a left lateral view of the transmission case cover 24.
Fig. 9 is a right lateral view of the transmission case cover 24.
Fig. 10 is a cross-sectional view taken along line X-X of Fig. 8.
Fig. 11 is a cross-sectional view taken along line XI-XI of Fig. 8.
Fig. 12 is a left lateral view of a front side-cover.
Fig. 13 is a right lateral view of the front side-cover.
Fig. 14 is a left lateral view of a rear side-cover.
Fig. 15 is a right lateral view of the rear side-cover.
Fig. 16 is a left lateral view of the front and rear side-covers which overlap each other at an extending portion 26E and a recessed portion 27D.
Fig. 17 is a cross-sectional view taken along line XVII-XVII of Fig. 16.
Fig. 18 is a perspective view of a general rear-half portion of the power unit.
Fig. 19 is a plan view of the general rear-half portion of the power unit.
Fig. 20 is a cross-sectional view taken along line XX-XX of Fig. 3.
Fig. 21 is a perspective view of the power unit with a protection cover disassembled from the rear portion thereof.
Fig. 22 is a cross-sectional view taken approximately along a breather pipe of the power unit.

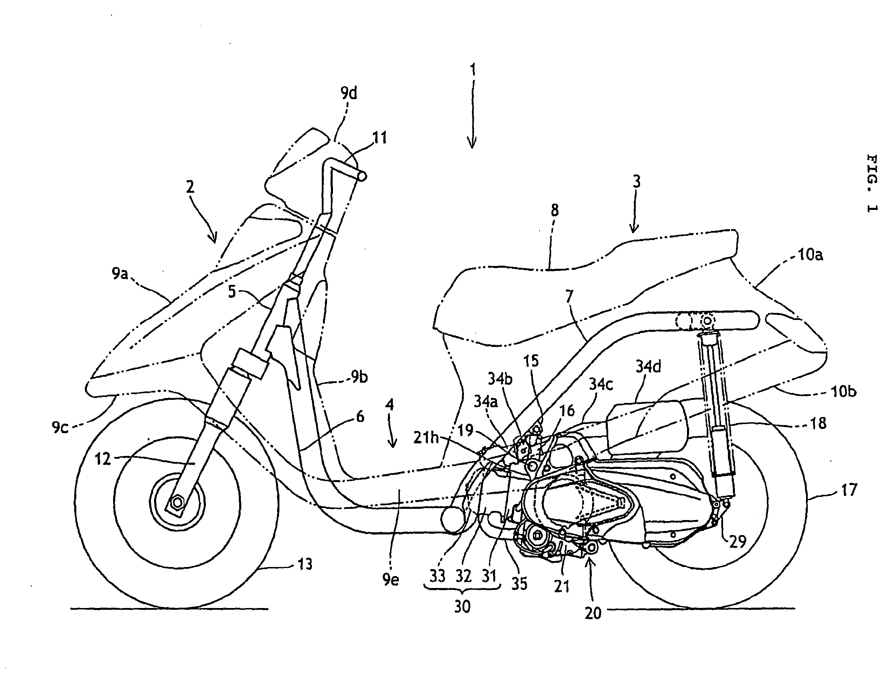

An embodiment of the present invention will hereinafter be described with reference to Figs. 1 through 22.
Fig. 1 is a lateral view of a scooter-type motorcycle 1 on which a power unit 20 is mounted according to the embodiment embodying the present invention.
A body front portion 2 and a body rear portion 3 are connected with each other via a low floor portion 4. A body frame forming the framework of a vehicle body is mainly composed of a down tube 6 and main pipes 7.

The down tube 6 extends downward from a head pipe 5 of the body front portion 2, horizontally bends at the lower end thereof, extends rearward below the floor portion 4 and connects at the rear end thereof with a pair of the main pipes 7. The main pipes 7 rise up from the connecting portion obliquely rearward, bending horizontally at a given height, and extend rearward.

A fuel tank and a storage box are supported by the main pipes 7 and a seat 8 is disposed above them.
On the other hand, in the body front portion 2 a handlebar 11 is provided on and turnably supported by the head pipe 5. A front fork 12 extends downward from the head pipe 5 and rotatably supports a front wheel 13 at the lower end thereof.

A bracket 15 is provided to project from the vicinity of the central portion of an oblique slant portion included in the main pipe 7. A power unit 20 is swingably connected to and supported by a link member 16 pivotally supported by the bracket 15.

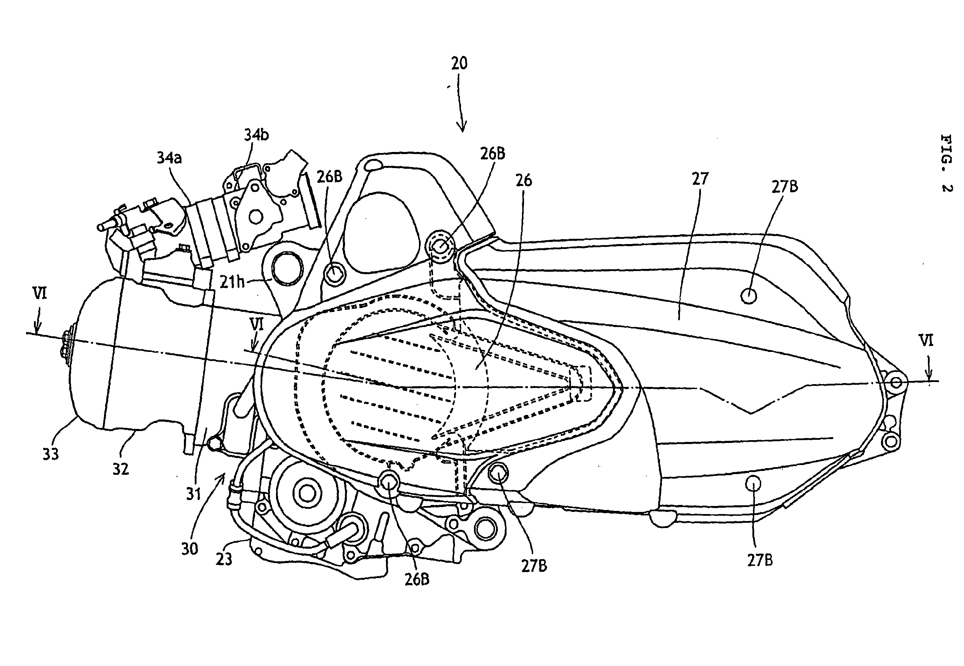

The power unit 20 includes an internal combustion engine 30 configured in the front portion of a unit case 21, a belt type continuously variable transmission 50 provided to extend rearward from the internal combustion engine 30, and a reduction gear mechanism 110 provided integrally therewith at the rear portion thereof. The output shaft of the reduction gear mechanism 110 is a rear axle 114 to which a rear wheel 17 is attached (see Fig. 2).

The power unit 20 is such that a pair of left and right power unit hangers 21h, 21h project forward from a front surface upper portion in the front portion of the unit case 21. The power unit hangers 21h, 21h are connected to the lower ends of the link members 16 via a pivot shaft 19. On the other hand, a rear cushion 18 is interposed between the main pipe 7 and a bracket 29 located at the rear end of the unit case 21 (the transmission case 23) in the swingable rear portion of the unit case 21 (see Fig. 1).

The internal combustion engine 30 is a single-cylinder 4-stroke cycle internal combustion engine. This engine protrudes from the front surface of the unit case 21 in such a posture as to be largely forwardly inclined to lie in an approximately horizontal state. The engine includes a cylinder block 31, a cylinder head 32 and a cylinder head cover 33 which are put on one another in this order from the front surface of the unit case 21.

An intake pipe 34a extends upward from an intake port located on the upper side of the cylinder head 32 and bends rearward. The intake pipe 34a is then joined to a throttle body 34b. A connection pipe 34c extends rearward from the throttle body 34b and is coupled to the air cleaner 34d disposed at the rear half portion of the unit case 21 so as to extend along the left side of the rear wheel 17.
An exhaust pipe 35 extends downward from an exhaust port located on the lower side of the cylinder head 32 and bends rearward. In addition, the exhaust pipe 35 bends rightward, extending rearward, and is coupled to a muffler (not shown) located on the right side of the rear wheel 17.

The body front portion 2 is covered from the front and the rear by the front cover 9a and the rear cover 9b, respectively, and from the left and right sides by a front lower cover 9c. The central portion of the handlebar 11 is covered by a handlebar cover 9d.
The floor portion 4 is covered by a side cover 9e. The body rear portion 3 is covered from the left and right sides by a body cover 10a and by a tail side-cover 10b.

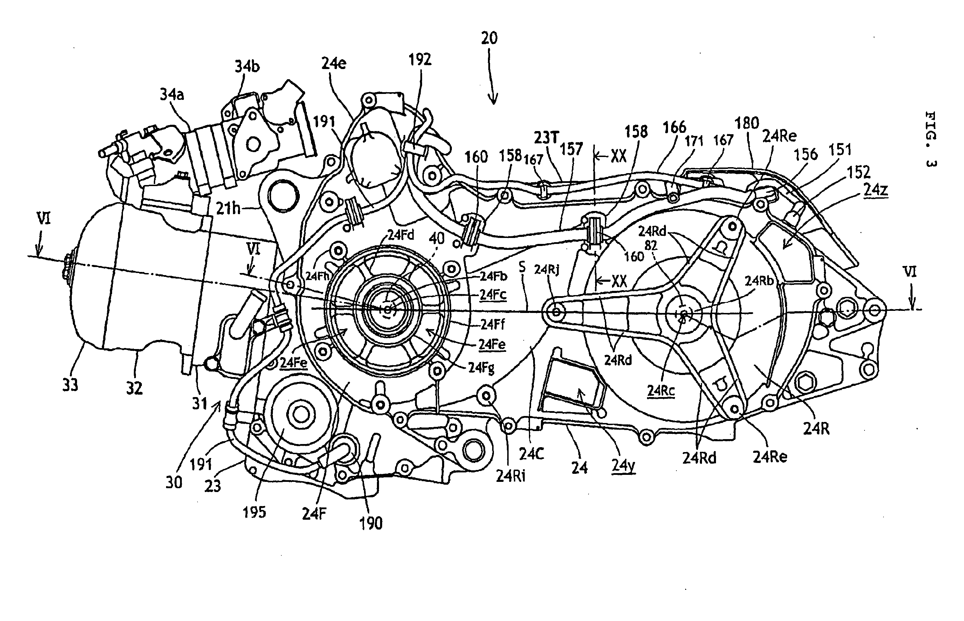

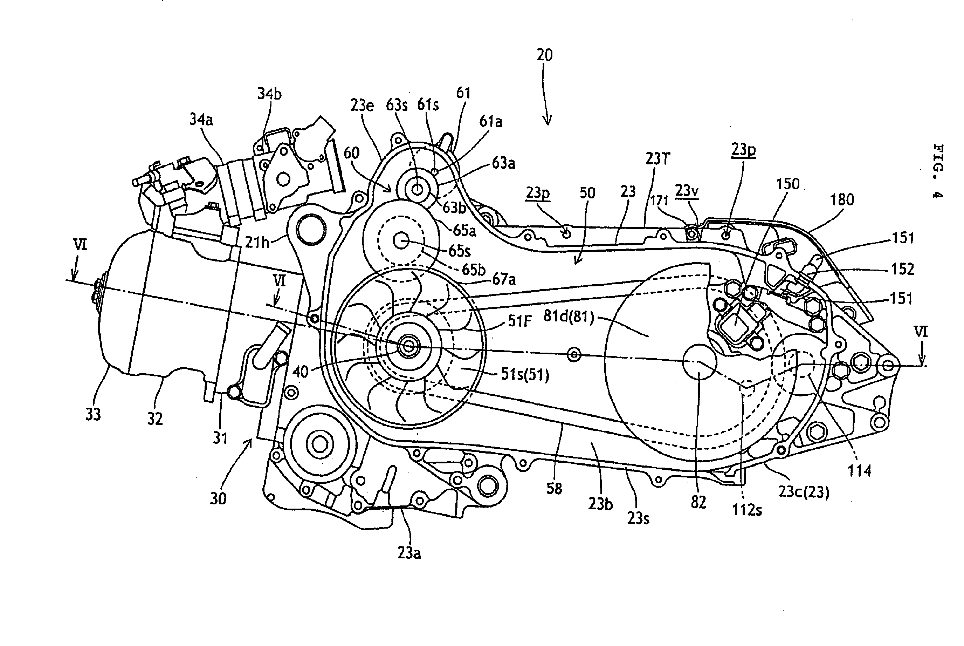

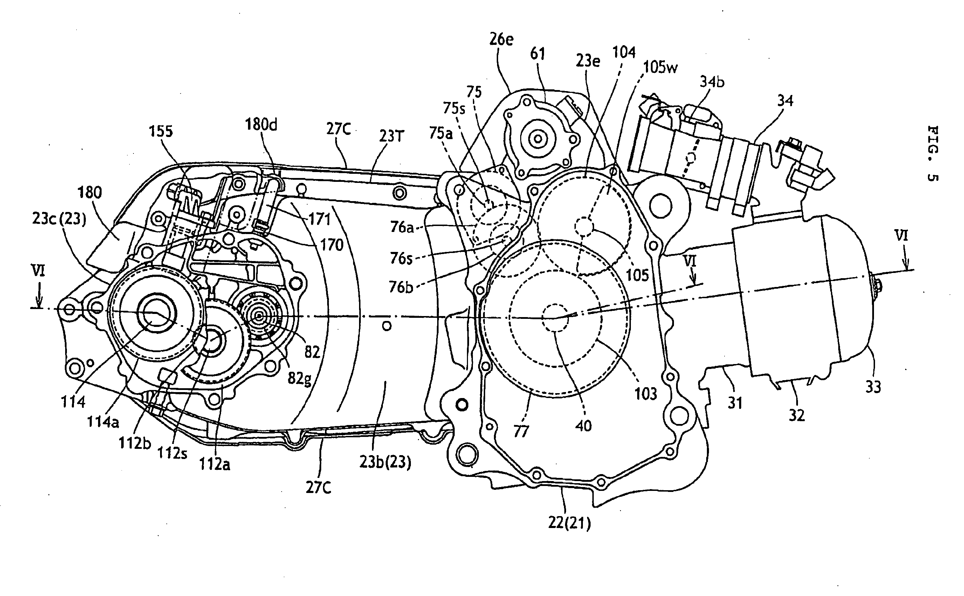

Fig. 2 is an external left-lateral view of the power unit 20. Fig. 3 is a left lateral view of the power unit 20 with a front side-cover 26 and a rear side-cover 27 constituting a left external cover removed. Fig. 4 is a left lateral view of the power unit 20 with a transmission case cover 24 further removed. Fig. 5 is a partially-omitted right lateral view of the power unit 20 with a reduction gear cover 25 removed.

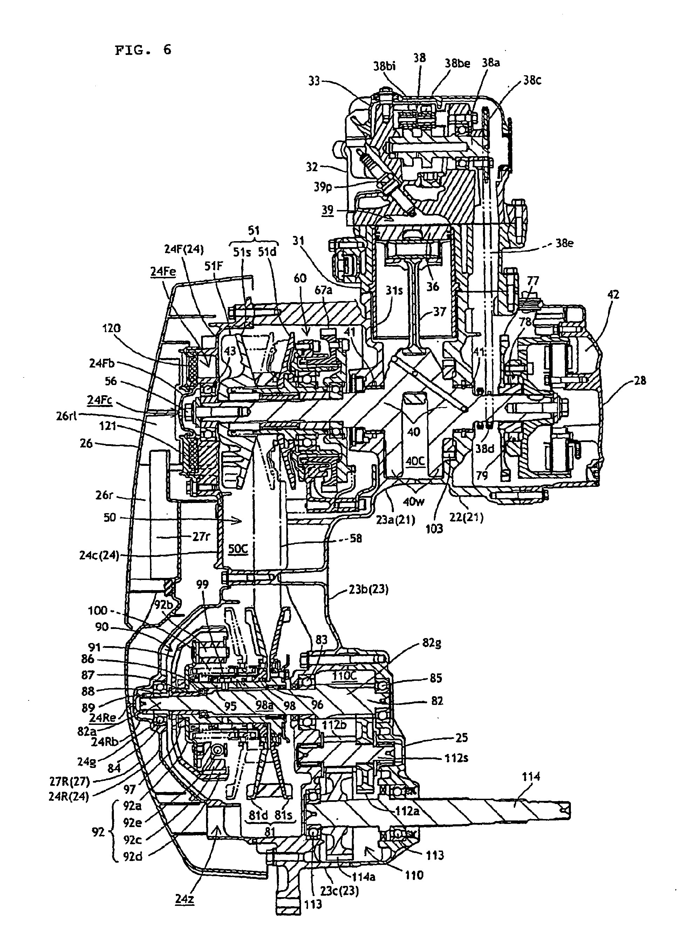

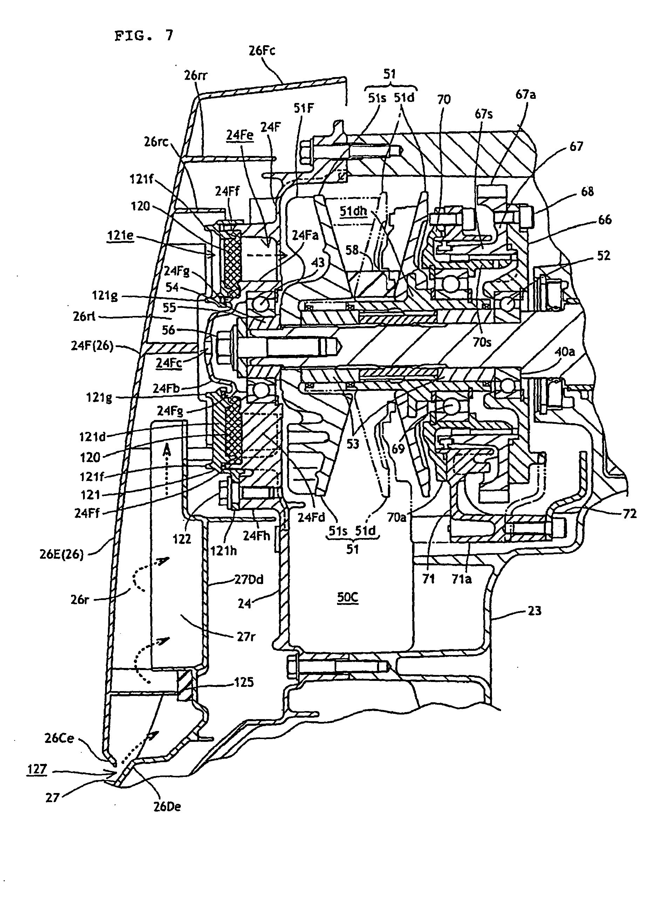

Fig. 6 is a developed cross-sectional view taken along line VI-VI of Fig. 2 and Fig. 7 is a partial enlarged view of Fig. 6.

Referring mainly to Fig. 6, the unit case 21 is split into left and right portions so that a left unit case relative to a right unit case 22 extends rearward to constitute the transmission case 23.
The transmission case 23 is composed of a left crankcase portion 23a formed on the right side of the front portion thereof, a transmission case portion 23b formed on the left side to extend from the front portion to the rear portion, and a reduction gear portion 23c formed on the right side of the rear portion. The left crankcase portion 23a of the front portion is joined to the right unit case 22 to constitute a crank chamber 40C housing a crankshaft 40. The transmission case portion 23b is covered from the left side by the transmission case cover 24 to constitute a speed-change chamber 50C housing the belt type continuously variable transmission 50. The reduction gear portion 23c of the rear portion is covered by a reduction gear cover 25 to constitute a reduction gear chamber 110C housing a reduction gear mechanism 110.

A cylinder sleeve 31s formed in the cylinder block 31 projects into the crank chamber 40C. Reciprocation of a piston 36 slidably fitted into the cylinder sleeve 31s is transmitted via a connecting rod 37 to a crankshaft 40 for rotation. The crankshaft 40 is rotatably journaled by the unit case 21 so as to extend along the left-right horizontal direction.

A valve operating mechanism 38 is provided on the cylinder head 32 which is forwardly inclined close to the horizontal. An intake rocker arm 38bi and an exhaust rocker arm 38be are in swingable contact with a cam shaft 38a of the valve operating mechanism 38 and drivingly opens and closes an intake valve and an exhaust valve not shown, respectively.
A timing chain 38e is spanned between a driven sprocket 38c fitted to the right end of the camshaft 38a and a drive sprocket 38d fitted to the crankshaft 40. The camshaft 38a is rotated by the timing chain 38e at a half speed reduction ratio of the crankshaft 40.
An ignition plug 39p is attached to the cylinder head 32 so as to expose an electrode to a combustion chamber 39 defined by a ceiling surface opposed to the top surface of the piston 36.

The crankshaft 40 rotatably journaled by left and right bearing circular holes of the unit case 21 via the main bearings 41, 41 and a pair of left and right crank webs 40w, 40w are received in the crank chamber 40C. An AC generator 42 is provided on a right-hand extending portion of horizontally leftward and rightward extending portions and a drive pulley 51 of the belt type continuously variable transmission 50 together with a speed-change drive mechanism 60 is provided on a left-hand extending portion.
The AC generator 42 is covered from the right by a generator cover 28.

Referring to Fig. 7, the left end of the crankshaft 40 is rotatably journaled via a collar 54 by an annular bearing portion 24Fa of the transmission case cover 24 via a bearing 43.
The drive pulley 51 is composed of a stationary pulley half body 51s and a movable pulley half body 51d.

The bearing 52, guide sleeves 53, the stationary pulley half body 51s and the collar 54 are fitted in this order from the right to the leftward extending portion, specifically, to a stepped portion 40a whose diameter is reduced compared with that of the crankshaft 40. In addition, they are fastened to the left end face of the crankshaft 40 via a washer 55 with a bolt 56. In this way, the inner race of the bearing 52, the guide sleeves 53, the base of the stationary pulley half body 51s and the collar 54 are fastened to be integral with the crankshaft 40.

Thus, the stationary pulley half body 51s is put between the guide sleeve 53 and the collar 54 and integrally fastened to the crankshaft 40 for rotation integral with the crankshaft 40.
Incidentally, a cooling fan 51F is formed to project from the rear surface (the left surface) of the stationary pulley half body 51s.

On the other hand, the movable pulley half body 51d on the right side of and opposite to the stationary pulley half body 51s can be rotated along with the crankshaft 40 and simultaneously axially slid in such a manner that a cylindrical movable pulley hub 51dh, the base of the movable pulley half body, is partially spline-fitted to the guide sleeve 53.

As described above, the right-hand movable pulley half body 51d opposed to the left-hand stationary pulley half body 51s is rotated along with the crankshaft 40 and axially slid to approach and separate from the stationary pulley half-body 51s. A V-belt 58 is put between and wound around the opposite taper surfaces of the pulley half bodies 51s, 51d.

With reference to Figs. 4 and 6, in the transmission case 23, a portion of the transmission case portion 23b rearward of the power unit hanger 21h largely protrudes upward as a protrusion 23e. The transmission case portion 23b is formed on the left side relative to the left crankcase portion 23a formed on the right side of the front portion. A shifting electric motor 61 which is a drive source for the speed-change drive mechanism 60 is attached to an upper portion of this protrusion 23e.

A gear cover member (not shown) is partially attached from the left to the protrusion 23e of the transmission case 23. A first reduction gear shaft 63s and a second reduction gear shaft 65s are rotatably journaled between the gear cover member and the wall surface of the transmission case 23. A drive gear 61a formed on a drive shaft 61s of the shifting electric motor 61 meshes with a large-diameter gear 63a of the first reduction gear shaft 63s. A small-diameter gear 63b of the first reduction gear shaft 63s meshes with a large-diameter gear 65a of the second reduction gear shaft 65s (see Fig. 4).

On the other hand, an internal thread member 67 is secured to a disk boss member 66 with a bolt 68, which is supported at its proximal end by the external race of the bearing 52 fitted to the crankshaft 40. The internal thread member 67 is formed at a flange portion with a large-diameter gear 67a, which meshes with a small-diameter gear 65b of the second reduction gear shaft 65s.
A cylindrical portion 67s of the internal thread member 67 is formed with an internal thread (screw thread) on an internal circumferential surface.

An external tread member 70 is supported via a bearing 69 fitted to the outer circumference of the movable pulley hub 51dh which supports the movable pulley half body 51d and is axially slidable. A cylindrical portion 70s of the external thread member 70 is located inside the cylindrical portion 67s of the internal thread member 67. An external thread formed on the outer circumferential surface of the cylindrical portion 70s meshes with an internal thread of the inner circumferential surface of the cylindrical portion 67s.
The external thread member 70 is such that the left end of the cylindrical portion 70s is exposed leftward from the left opening end of the cylindrical portion 67s of the internal thread member 67. A flange portion 70a extends from the left end thereof in a centrifugal direction along the rear surface of the movable pulley half body 51d.

An annular member 71 is secured to the outer circumferential portion of the flange portion 70a of the external thread member 70. A rear portion of the annular member 71 extends rearward and further extends axially rightward so as to go around the external side of the large-diameter gear 67a of the internal thread member 67, thus forming an extension 71a. A pair of upper and lower guide pieces 72, 72 projecting into the speed-change chamber 50C of the transmission case 23 regulate the rotation of the extension 71a and guide the axial movement while gripping it (see Fig. 7).

Thus, the external thread member 70 supported via the bearing 69 by the movable pulley hub 51dh integral with the movable pulley half body 51d can be slid only in an axial direction while being restricted to be rotated by the guide pieces 72, 72.

The speed-change drive mechanism 60 is configured as described above. When the shifting electric motor 61 is driven to rotate the drive gear 61a formed on the drive shaft 61s, the large-diameter gear 63a of the first reduction gear shaft 63s meshing with the drive gear 61a is rotated along with the small-diameter gear 63b in a speed-reduced manner. The large-diameter gear 65a of the second reduction gear shaft 65s meshing with the small-diameter gear 63b is rotated along with the small-diameter gear 65b in a further speed-reduced manner. The large-diameter gear 67a of the internal thread member 67 meshing with the small-diameter gear 65b is rotated in a further speed-reduced manner, thus, rotating the internal thread member 67.

When the internal thread member 67 is rotated, the external thread member 70 is axially moved by the thread mechanism because the external thread member 70 meshing with the internal thread member 67 is restricted to be rotated.
The axial movement of the external thread member 70 axially moves the movable pulley hub 51dh integrally with the movable pulley half body 51d via the bearing 69, thereby allowing the movable pulley half body 51d to approach and separate from the stationary pulley half body 51s.

Incidentally, since the movabe pulley hub 51dh integrally supporting the movable pulley half body 51d is spline-fitted to the guide sleeve 53 integral with the crankshaft 40, the movable pulley half body 51d axially moves while rotating together with the crankshaft 40.

As described above, the normal and reverse drive of the shifting electric motor 61 allows the movable pulley half body 51 to approach and separate from the stationary pulley half body 51s. This changes the winding diameter of the V-belt 58 wound between the opposite taper surfaces of the pulley half bodies 51s, 51d to provide continuously variable speed-change.

A starter motor 75 is mounted on the right crankcase (unit case) 22 at a position rearward of and obliquely below the shifting electric motor 61 mounted from the right to the protrusion 23e of the transmission case portion 23b.
The starter motor 75 is mounted from the left to the left lateral surface of a protrusion 22e protruding from rightward of and slightly rearward of the right crankcase 22 in a posture where the drive shaft 75s lies parallel to the left-right direction as with the shifting electric motor 61 (see Fig. 5).

With reference to Fig. 5 which is a right lateral view, a reduction gear shaft 76s is rotatably journaled between the drive shaft 75s of the starter motor 75 and the crankshaft 40. A large-diameter gear 76a integral with the reduction gear shaft 76s meshes with a drive gear 75a formed on the drive shaft 75s.
On the other hand, a driven gear 77 is located adjacently to the AC generator 42 provided on the right end of the crankshaft 40. In addition, the driven gear 77 is fitted to and supported by a rotational boss 78 rotatably carried by the crankshaft 40 (see Fig. 6). Further, the driven gear 77 meshes with a small-diameter gear 76b integral with the reduction gear shaft 76s.

Incidentally, a one-way clutch 79 is interposed between an outer rotor 42r integral with the crankshaft 40 of the AC generator 42 and the rotational boss 78.
Thus, when the starter motor 75 is driven to rotate the drive gear 75a formed on the drive shaft 75s, the large-diameter gear 76a of the reduction gear shaft 76s meshing with the drive gear 75a is rotated together with the small-diameter gear 76b in a speed-reduced manner. The driven gear 77 meshing with the small-diameter gear 76b is rotated together with the rotational boss 78 in a further speed-reduced manner. The rotation of the rotational boss 78 rotates the outer rotor 42r of the AC generator 42 via the one-way clutch 79 along with the crankshaft 40, thereby starting up the internal combustion engine 30.

With reference to Fig. 5, a balancer shaft 105 is journaled above the crankshaft 40 so that a balancer weight 105w is rotated between the left and right crank webs 40w, 40w. A balancer driven gear 104 fitted to the balancer shaft 105 meshes with a balancer drive gear 103 fitted to the crankshaft 40.
In this way, the balancer weight 105w simultaneously rotated by the rotation of the crankshaft 40 suppresses vibration resulting from the operation of the internal combustion engine 30.

A description is next given of the structure of the rear portion of the power unit 20.
With reference to Fig. 6, a driven pulley 81 corresponding to the drive pulley 51 of the belt type continuously variable transmission 50 is composed of a stationary pulley half body 81s and a movable pulley half body 81d, which are supported by a driven shaft 82 so as to be opposed to each other.
The driven shaft 82 is rotatably journaled at three positions, i.e., by the transmission case 23, the transmission case cover 24 and the reduction gear cover 25 via the bearings 83, 84 and 85, respectively.

With reference to Fig. 6, the driven shaft 82 is formed on the left-hand portion with a small-diameter portion 82a which extends from a stepped portion and has a slightly reduced external diameter. A bearing 86, a support sleeve 87 and a collar 88 are fitted to the small-diameter portion 82a in this order and integrally fastened thereto with a nut 89 threadedly engaged with the end thereof.

The bearing 84 is interposed between an annular bearing portion 24Ra of the transmission case cover 24 and the collar 88.
A bowl-like clutch outer 91 of a centrifugal clutch 90 is secured at a base to the support sleeve 87 for rotation integral with the driven shaft 82.

A cylindrical stationary pulley hub 95 adapted to support the stationary pulley half body 81s is journaled for rotation relative to the driven shaft 82 via the bearing 86 and a bearing 96 interposed therebetween on the outer circumference of a portion of the driven shaft 82. This portion is located on the right side of the clutch outer 91 and covered by the transmission case cover 24.

A support plate 92a which is a clutch inner 92 of the centrifugal clutch 90 is secured to the left end of the stationary pulley hub 95 with a nut 97.
An arm 92c is supported at a proximal end by the support plate 92a with a pivot shaft 92b. A clutch shoe 92d is secured to the leading end of the arm 92c.
The arm 92c is biased by a spring 92e in a direction where the clutch shoe 92d is separated from the inner circumferential surface of the clutch outer 91.

A cylindrical movable pulley hub 98 adapted to support the movable pulley half body 81d is provided for axial slide on the outer circumference of the cylindrical stationary pulley hub 95 adapted to support the clutch inner 92.
Specifically, the cylindrical movable pulley hub 98 is formed with an axially elongate guide hole 98a and a guide pin 99 provided to project from the stationary pulley hub 95 is slidably engaged with the guide hole 98a.

In this way, the movable pulley hub 98 is restricted by the guide pin 99 to rotate relative to the stationary pulley hub 95 and can axially be slid on the stationary pulley hub 95 while being guided by the guide hole 98a.
A coil spring 100 is interposed between the support plate 92a integrally attached to the stationary pulley hub 95 and the movable pulley hub 98. The movable pulley hub 98 is biased rightward by the coil spring 100.

With the configuration as described above, the movable pulley half body 81d supported by the movable pulley hub 98 is rotated together with the stationary pulley half body 81s supported by the stationary pulley hub 95 and can be slid in the axial direction. In addition, the movable pulley half body 81d is biased by the coil spring 100 in the direction of approaching the stationary pulley half body 81s.

The V-belt 58 is wound between the opposite taper surfaces of the stationary pulley half body 81s and the movable pulley half body 81d. The winding diameter of the driven pulley 81 is changed in inverse proportion to and in conjunction with the winding diameter of the drive pulley 51 for executing continuously variable speed-change.

When the number of the rotation of the drive pulley 51 exceeds a predetermined number, the clutch shoe 92d of the clutch inner 92 of the centrifugal clutch 90 comes into contact with the inner circumferential surface of the clutch outer 91 for integral rotation, transmitting power to the driven shaft 82.

The rear portion of the transmission case 23 is covered from the right by the reduction gear cover 25 to define the reduction gear chamber 110C housing the reduction gear mechanism 110.
As shown in Fig. 4, a reduction gear shaft 112s is journaled at both ends via bearings 111, 111 between the rear portion of the transmission case 23 and the reduction gear cover 25 which are opposed to each other. A large-diameter gear 112a integral with the reduction gear shaft 112s meshes with a small-diameter gear 82g formed on the driven shaft 82.

Similarly, the rear axle 114 is rotatably journaled via bearings 113, 113 by the rear portion of the transmission case 23 and the reduction gear cover 25. The rear axle 114 projects rightward from the right-hand bearing 113. A large-diameter gear 114a integrally fitted to the rear axle 114 meshes with the small-diameter gear 112b integral with the reduction gear shaft 112s.

The rear wheel 17 is fitted to a portion of the rear axle 114 projecting rightward from the reduction gear cover 25.
In this way, the rotation of the driven shaft 82 is reduced in speed via the reduction gear mechanism 110 and transmitted to the rear axle 114 for rotating the rear wheel 17.

In the power transmission structure of the power unit 20 as described above, the transmission case cover 24 is provided in the front portion with a configuration for introducing cooling air into the speed-change chamber 50C defined by the transmission case 23 and the transmission case cover 24 to cool the belt type continuously variable transmission 50.

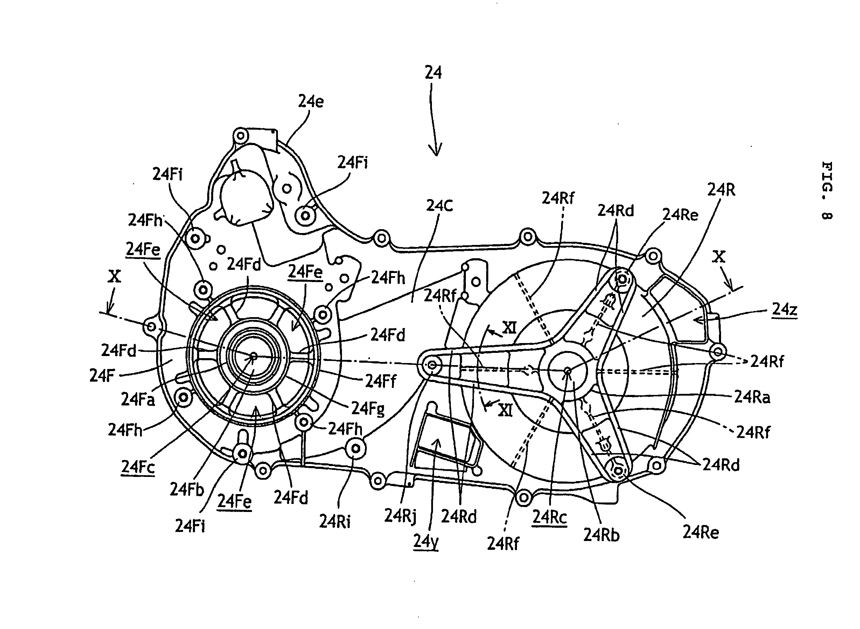

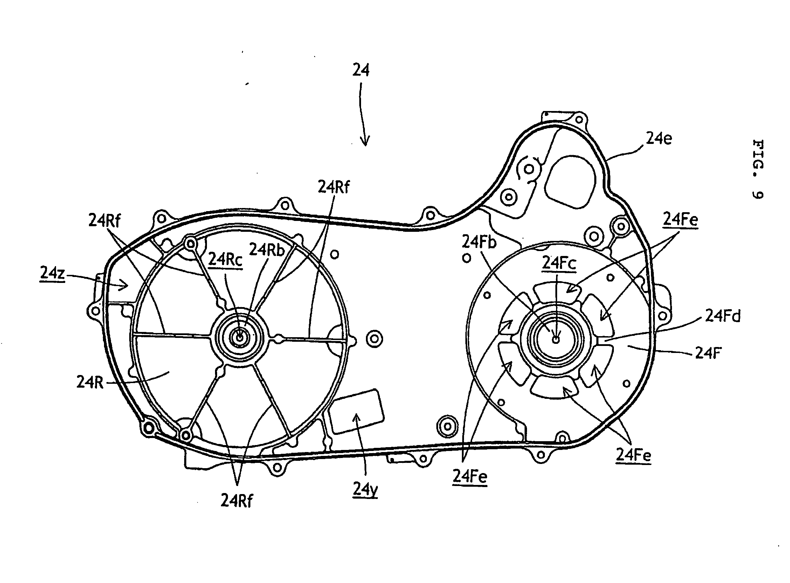

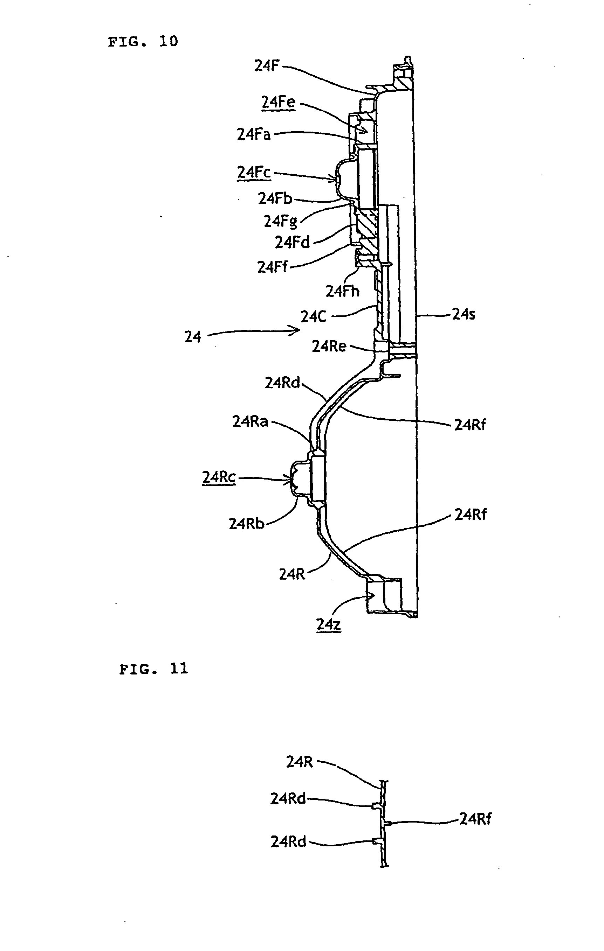

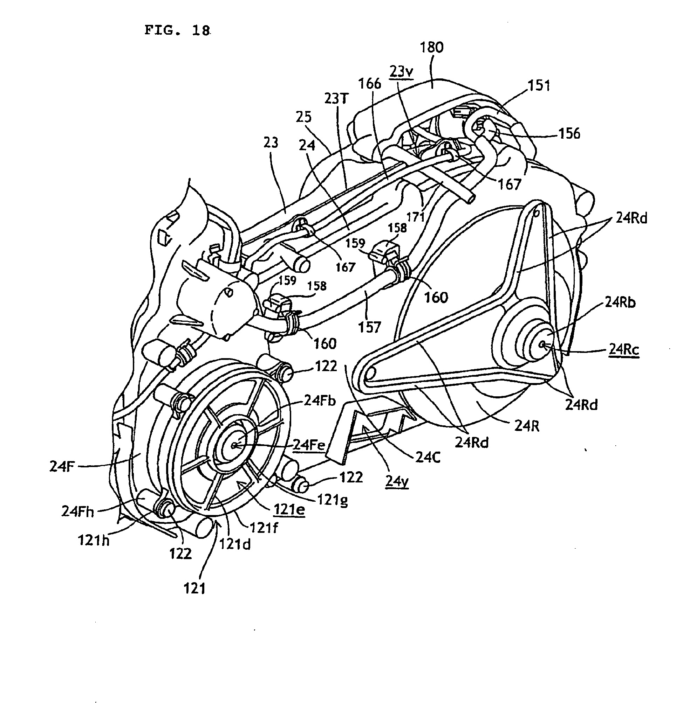

Fig. 8 is a left lateral (external surface) view of the transmission case cover 24. Fig. 9 is a right lateral (internal surface) view of the transmission case cover 24. Fig. 10 is a cross-sectional view of the transmission cover 24 (taken along line X-X of Fig. 8). Fig. 11 is a cross-sectional view taken along line XI-X1 of Fig. 8.
Incidentally, Fig. 18 is a perspective view illustrating the approximate rear portion of the power unit 20, i.e., the transmission case cover 24 together with the transmission case 23.

The transmission case cover 24 is formed at a front portion with a circular wall portion 24F which slightly protrudes leftward (outwardly) like an almost-circular flat plate from a mating plane 24s with the transmission case 23. In addition, the transmission case cover 24 is formed at a rear portion with a dome wall 24R which largely protrudes from the mating plane 24s (see Figs. 10 and 18).
The front side circular wall portion 24F covers the drive pulley 51 and the rear side dome wall 24R houses and covers the centrifugal clutch 90 so as to surround it.

Incidentally, the transmission case cover 24 is formed with a flat connection wall 24C, also referred to as connection portion, (see Figs. 10 and 18) between the externally protruding circular wall portion 24F and the dome wall 24R. In addition, the transmission case cover 24 is formed with a protruding portion 24e which is located above the circular wall portion 24F so as to face the protruding portion 23e of the transmission case 23.

The circular wall portion 24F is formed at a central portion with the annular bearing portion 24Fa adapted to support the left end of the crankshaft 40 via the bearing 43. The dome wall 24R is formed at a top portion with the annular bearing portion 24Ra adapted to support the left end of the driven shaft 82 via the bearing 84.

The annular bearing portion 24Fa located at the central portion of the circular wall portion 24F has an inside lateral wall which protrudes axially outwardly to form a small bowl-like protruding wall 24Fb adapted to cover the shaft end of the crankshaft 40. The protruding wall 24Fb is bored at a center with a small-diameter breathing hole 24Fc.
Similarly, the annular bearing portion 24Ra located at the central portion of the dome wall 24R has an inside lateral wall which protrudes axially outwardly to form a small bowl-like protruding wall 24Rb adapted to cover the shaft end of the driven shaft 82. The protruding wall 24Rb is bored at a center with a small-diameter breathing hole 24Rc.

The circular wall portion 24F on the external circumference of the front side annular bearing portion 24Fa is bored with six sectoral cooling air introducing ports 24Fe with six radially-formed connection ribs 24Fd left.
In other words, the annular bearing portion 24Fa is carried by the six connection ribs 24Fd.
The cooling air introducing ports 24Fe formed on the external periphery of the annular bearing portion 24Fa are openings adapted to introduce cooling air into the speed-change chamber 50C.

Two of the six connection ribs 24Fd lie on a straight line connecting the anteroposterior breathing holes 24Fc, 24Rc as viewed from the side.
Specifically, the two anteroposterior connection ribs 24Fd are formed on a plane S containing the driven shaft 82 and the crankshaft 40 which is a drive shaft of the belt type continuously variable transmission 50 (see Fig. 3).
The anteroposterior rigidity of the transmission case cover 24 subjected to the force resulting from the rotation of the V-belt can be ensured to reduce vibration.

A circular outer-annular projection 24Ff and a circular inner-annular projection 24Fg slightly project leftward along the outer circumferential edge and inner circumferential edge, respectively, of the six sectoral cooling air introducing ports 24Fe.
The outer annular projection 24Ff and inner annular projection 24Fg are on the outer periphery of the protruding wall 24Fb.
Four holder attachment bosses 24Fh used to attach a filter holder 121 are formed on the external periphery of the outer-annular projection 24Ff.
In addition, cover attachment bosses 24Fi are formed at two anteroposterior positions in the upper portion of the circular wall portion 24F and at one position in the lower portion thereof, i.e., at three positions in total.

On the other hand, on the dome wall 24R on the outer circumference of the rear side annular bearing portion 24Ra, three U-shaped external ribs 24Rd each formed in a U-shape extend radially from the annular bearing portion 24Ra located on the center of the lateral surface (the external surface).
Specifically, each U-shaped external rib 24Rd is formed in a U-shape where a pair of almost parallel sides extend centrifugally from the annular bearing portion 24Ra, bending at both leading ends, and are joined together.
The three U-shaped external ribs 24Rd are equally spaced apart from each other and the respective proximal ends of the adjacent U-shaped external ribs 24Rd are joined together at the annular bearing portion 24Ra.

One of the three U-shaped external ribs 24Rd extends forward from the annular bearing portion 24Ra in parallel or almost in parallel to the straight line connecting the anteroposterior breathing holes 24Fc, 24Rc as viewed from the side and terminates at the center of the transmission case cover 24 to form a tip-bent portion. At this tip-bent portion a cover attachment boss 24Rj is formed to attach the transmission case cover 24 to the transmission case 23 (see Fig. 8).

The pair of sides of the forward extending U-shaped external rib 24Rd are formed to extend approximately parallel to the plane S containing the drive shaft (the crankshaft 40) of the belt type continuously variable transmission 50 and the driven shaft 82 and to be equally spaced apart from the plane S.
Thus, the anteroposterior rigidity of the dome wall 24R included in the transmission case cover 24 is particularly increased to further effectively suppress the anteroposterior vibration resulting from the rotation of the V-belt 58 of the belt type continuously variable transmission 50.

With respect to the anteroposteriorly extending U-shaped external rib 24Rd the other two U-shaped external ribs 24Rd extend from the annular bearing portion 24Ra obliquely rearward in the angular direction of about 120 degrees, one of them extending upwardly and the other downwardly. A cover attachment boss 24Re is formed on each tip-bent portion.
Thus, the rigidity of the entire dome wall 24R can efficiently be increased by the small number of the ribs.
In addition, a cover attachment boss 24Ri is formed at one position in the lower portion of the connection wall 24C.

Six internal ribs 24Rf is formed on the right surface (the inside surface) of the dome wall 24R to extend radially from the central annular bearing portion 24Ra.
The six internal ribs 24Rf are formed at equal intervals on the periphery of the annular bearing portion 24Ra. Among them, two anteroposteriorly extending internal ribs 24Rf lie on the straight line connecting the anteroposterior breathing holes 24Fc, 24Rc as viewed from the side.
Thus, of the six internal ribs 24Rf, three are approximately parallel to the respective U-shaped external ribs 24Rd on the external surface. Each of the internal ribs 24Rf lies between the associated U-shaped side ribs of the U-shaped external ribs 24Rd, that is, does not overlap the associated U-shaped external rib 24Rd.

As described above, the dome wall 24R on the rear side of the transmission case cover 24 is formed on the external surface with the three U-shaped external ribs 24Rd which radially project and on the internal surface with the six internal ribs 24Rf which radially project. Thus, the synergetic effect of the U-shaped external ribs 24Rd and internal ribs 24Rf allows the dome wall 24R to have remarkably increased rigidity, whereby the small number of the simple ribs can suppress the vibration of the dome wall 24R.

Incidentally, a cooling air outlet passage 24y is formed in an anteroposteriorly central lower portion of the dome wall 24R of the transmission case cover 24. In addition, a cooling air outlet passage 24z is formed in a rearward oblique upper portion thereof.

Fig. 3 illustrates a state where the transmission case cover 24 as described above is put on the transmission case 23 so as to cover the belt type continuously variable transmission 50.
A hollow disklike filter element 120 is fitted to an annular portion where the six cooling air introducing ports 24Fe are bored between the outer-annular projection 24Ff and the inner-annular projection 24Fg of the circular wall portion 24F in the front portion of the transmission case cover 24. The filter element 120 is attached to the cooling air introducing ports 24Fe by being pressed from the outside by a filter holder 121.

The filter holder 121 is generally formed of an outer-annular portion 121f and an inner-annular portion 121g fitted to the outer-annular projection 24Ff and inner-annular projection 24Fg, respectively, of the transmission case cover 24, and six connection ribs 121d extending radially from the inner-annular portion 121g and connected to the outer-annular portion 121f. Four bolt boss portions 121h are formed of radial extensions from the outer-annular portion 121f.

The six connection ribs 121d of the filter holder 121 are opposed to the six respective connection ribs 24Fd of the transmission case cover 24. Thus, cooling air introducing ports 121e are formed to correspond to the six respective sectoral cooling air introducing ports 24Fe of the transmission case cover 24.

In the filter holder 121, the outer-annular portion 121f and inner-annular portion 121g of the filter holder 121 are connectably fitted to the outer-annular projection 24Ff and inner-annular projection 24Fg, respectively, of the transmission case cover 24. The six connection ribs 24Fd of the filter holder 121 are pressed against the six connection ribs 24Fd of the transmission case cover 24 so as to grip the filter element 120 therebetween. The bolt boss portions 121h are put on the four respective holder attachment bosses 24Fh located on the external periphery and fastened thereto with respective bolts 122.

The six cooling air introducing ports 121e of the filter holder 121 and the filter element 120 are disposed on the external periphery of the protruding wall 24Fb which protrudes from the annular bearing portion 24Fa of the transmission case cover 24 so as to cover the shaft end of the crankshaft 40. In addition, the six cooling air introducing ports 24Fe of the transmission case cover 24 are formed on the external periphery of the annular bearing portion 24Fa. The six cooling air introducing ports 24Fe are located to face the cooling fan 51F on the rear of the stationary pulley half body 51s secured to the crankshaft 40.

In this way, the cooling fan 51F is integrally rotated with the crankshaft 40 to cause cooling air to flow from the outside of the filter holder 121 and pass through the cooing air introducing ports 121e, the filter element 120 and the cooling air introducing ports 24Fe in this order for filtration, then entering the speed-change chamber 50C.

The inside lateral wall of the annular bearing portion 24Fa of the transmission case cover 24 which journals the end of the crankshaft 40 via the bearing 43 protrudes axially outwardly to form the protruding wall 24Fb adapted to cover the shaft end of the crankshaft 40. Thus, the intake cooling air is directed by the protruding wall 24Fb to flow along the external periphery thereof, smoothly led to the cooling air introducing ports 24Fe on the external periphery of the annular bearing portion 24Fa, and introduced into the speed-change chamber 50C. This can increase the amount of cooling air introduced into the belt type continuously variable transmission 50.
The cooling air introduced into the speed-change chamber 50C flows rearward while cooling the belt type continuously variable transmission 50 and is discharged from the cooling air outlet passage 24z in the rear portion of the transmission case cover 24.

The nearly front-half portion of the transmission case cover 24 is covered from the side by the front side-cover 26 and the nearly rear-half portion thereof is covered from the side by the rear side-cover 27. Thus, the cooling air introducing ports 121e, 24Fe are covered by the front side-cover 26.

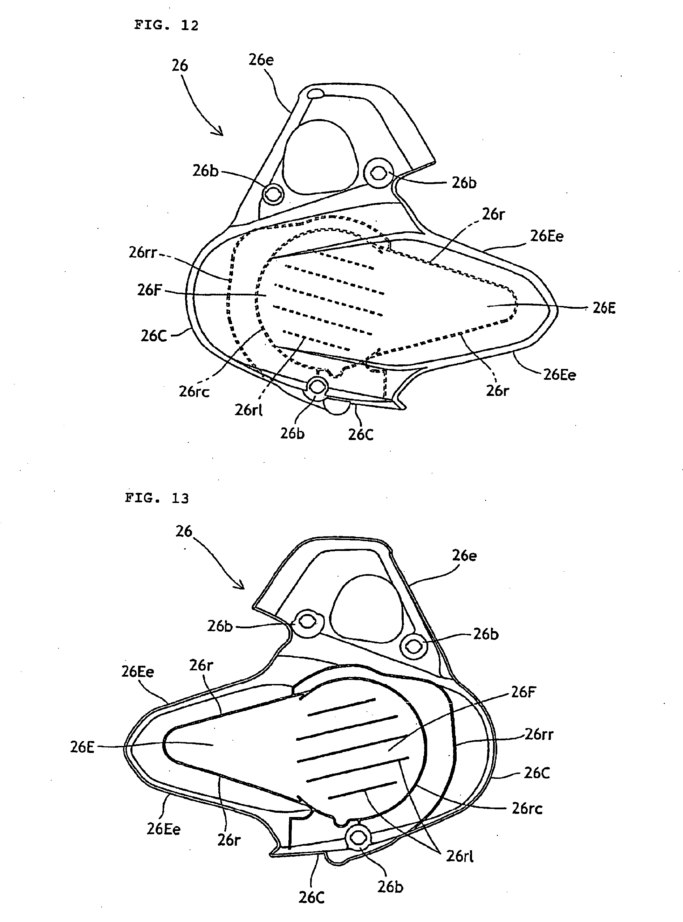

With reference to Figs. 12 and 13, the front side-cover 26 is composed of a front wall portion 26F corresponding to the circular wall portion 24F of the transmission case cover 24 and an extending portion 26E. This extending portion 26E is formed with a protruding portion 26e which protrudes upward of the front wall portion 26F so as to correspond to the protruding portion 24e of the transmission case cover 24 and which acutely extends rearward of the front wall portion 26F so as to be gradually reduced in vertical width as it goes rearward.
The front wall portion 26F covers the transmission case cover 24 from the front and from the downside by a circumferential wall 26C (see Figs. 6 and 7).

Upper and lower lateral edges 26Ee of the extending portion 26E formed to have an acute angle slightly bend inwardly (rightward) until they join together at their rear ends.
Front cover ribs 26r are formed to project from the inner surface (the right surface) of the protruding portion 26E.
As shown in Fig. 13, the respective front cover ribs 26r are formed generally parallel to the upper and lower lateral edges 26Ee and wedge-shaped or tapered to have an acute angle therebetween.
The upper and lower front cover ribs 26r formed to be wedge-shaped or tapered extend forward, draw a large circular arc on the inner surface of the front wall portion 26F and join together to form a rib circular portion 26rc.

In this way, the front cover rib 26r forms one closed loop. In addition, the rib circular portion 26rc of the front wall portion 26F is disposed at a position surrounding the outer circumference of the circular outer-annular projection 24Ff to which the filter element 120 on the front side of the transmission case cover 24 is fitted.

A second front cover rib 26rr is formed on the inner surface of the front wall portion 26F of the front side-cover 26 so as to project and further surround the rib circular portion 26rc from the outer circumference. In addition, five linear flow-guide ribs 26rl are formed to project from the inside of the rib circular portion 26rc and to extend parallel to each other and slightly forwardly upwardly, rather than horizontally.
Incidentally, the front side-cover 26 is formed with attachment boss portions 26b at three positions, i.e., front and rear upper portions and a lower portion of the front-side wall portion 26F.

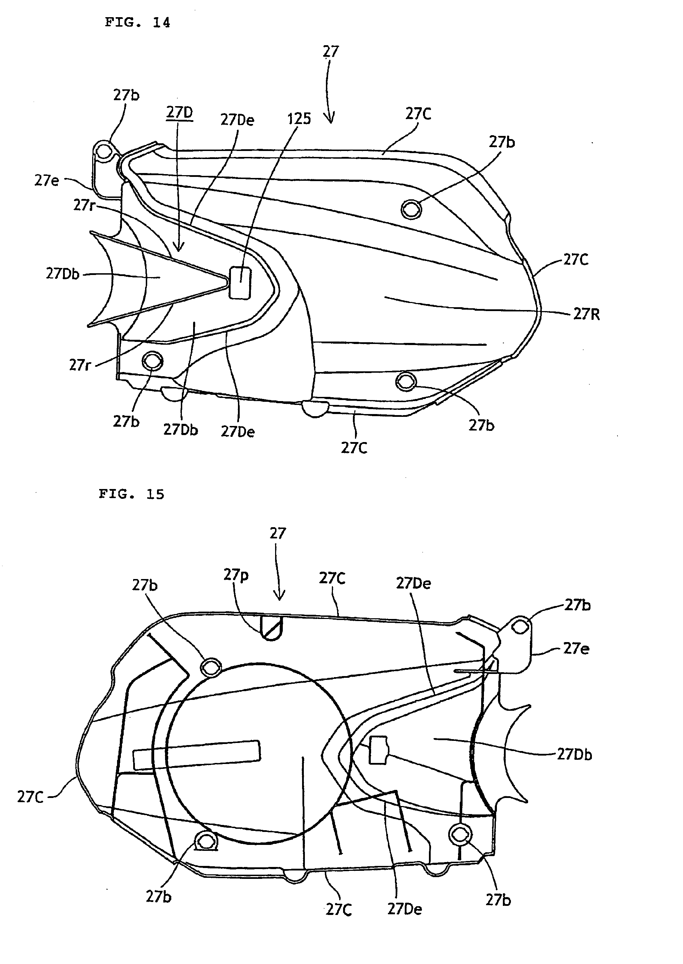

With reference to Figs. 14, 15 and 17 (additionally to Fig. 6), the rear side-cover 27 roughly covering the rear-half portion of the transmission case cover 24 is composed of a rear wall portion 27R and circumferential walls 27C. The rear wall portion 27R covers from the side the connection wall 24C and dome wall 24R, rearward thereof, of the transmission case cover 24. The circumferential walls 27C extend from the upside of the connection portion 24C and the dome wall 24R on the rear side thereof, through the rearward thereof, to the downside thereof to cover them. The rear wall portion 27R is formed at a vertically central portion of the front portion with a recessed portion 27D which is recessed toward the connection portion 24C of the transmission case cover 24.

In the recessed portion 27D of the rear side-cover 27, bending edges 27De as boundary lines from which the rear-side wall portion 27R is recessed have the same shape as that of the upper and lower lateral edges 26Ee of the extending portion 26E which acutely extends rearward of the front side-cover 26 so as to be gradually reduced in vertical width as it goes rearward.
Thus, the recessed portion 27D of the rear side-cover 27 is such that the upper and lower bending edges 27De acutely extend to be gradually reduced in vertical width as it goes rearward and meet each other and are joined together at rear ends.

Rear cover ribs 27r are formed to project from the external surface (the left surface) of the bottom wall 27Db of the recessed portion 27D.
As shown in Fig. 14, the rear cover ribs 27r are acutely formed approximately parallel to the corresponding upper and lower bending edges 27De to be wedge-shaped or tapered.
The wedge-shaped or tapered upper and lower rear cover ribs 27r have rear ends which meet each other and join together and front ends which project from the front end of the rear wall portion 27R while opening slightly forwardly.

A parallelepipedic elastic body 125 is secured to the bottom wall 27Db so as to be abutted from the rearward against the rear ends of the upper and lower rear cover rib 27r which meet each other.
An opening support portion 27p U-shaped in cross-section is formed on the inner surface (the right surface) of the rear side-cover 27 at a desired position along the upper circumferential wall 27C so as to open rightward and extend leftward like a trough with the circumferential wall 27C taken as a ceiling surface. The opening support portion 27p is adapted to support the tip opening portion of a breather pipe.

Incidentally, the rear side-cover 27 is formed with attachment boss portions 27b at four positions, i.e., at upper and lower rear portions of the rear wall portion 27R, a portion of the front portion of the rear wall portion 27R below the rear cover rib 27r, and a bracket 27e extending slightly forward of the front portion.

The rear side-cover 27 is put on the lateral surface of the roughly rear-half portion of the transmission case cover 24. The attachment boss portions 27b at the three positions, i.e., at the upper and lower rear portions and front lower portion, are fastened to the cover attachment bosses 24Ri of the transmission case cover 24 with bolts 27B to mount the rear side-cover 27. Thereafter, the front side-cover 26 is put on the lateral surface of the roughly front-half portion of the transmission case cover 24. Thus, the extending portion 26E extending rearward of the transmission case cover 24 overlaps the recessed portion 27D of the rear side-cover 27 so as to cover it. In this state, the three attachment boss portions 26b are fastened to the cover attachment boss portions 24Fi of the transmission case cover 24 with bolts 26B to mount the front side-cover 26 (see Fig. 2).
Incidentally, the attachment boss portion 26b at the upper rear portion of the front side-cover 26 is co-fastened to the cover attachment boss portions 24Fi of the transmission case cover 24 with a bolt 26B shared by the attachment boss portion 27b at the upper front portion of the rear side-cover 27.

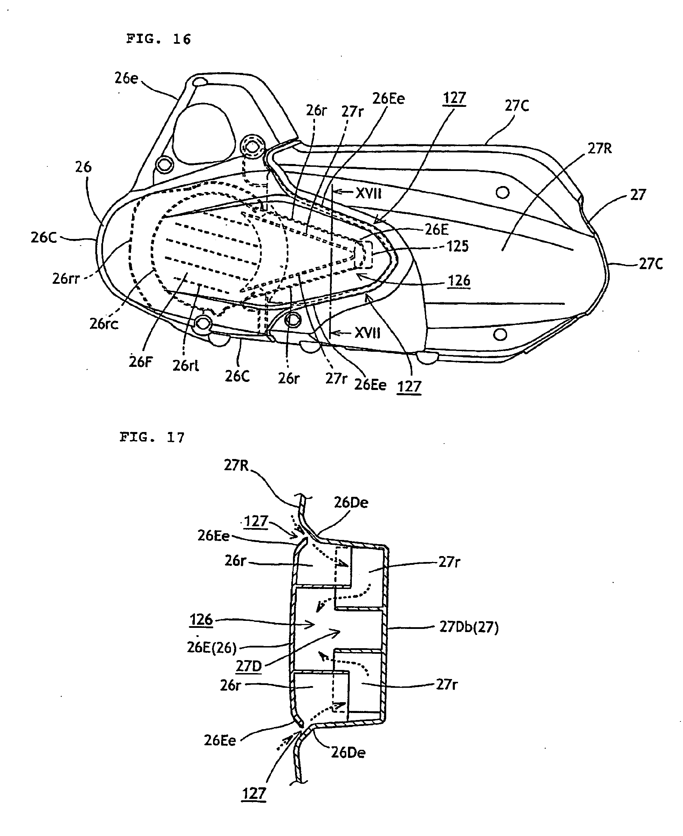

Fig. 16 is a lateral view illustrating a state where the front side-cover 26 and the rear side-cover 27 overlap each other at the extending portion 26E and the recessed portion 27D. Fig. 17 is a cross-sectional view illustrating an essential portion where they overlap each other.
A cooling air intake passage 126 is defined between the extending portion 26E extending rearward of the front side-cover 26 and the recessed portion 27D of the rear side-cover 27 which overlap each other.

The cooling air intake passage 126 has the positional relationship where the wedge-shaped or tapered front cover ribs 26r of the front side-cover 26 cover from the outside the wedge-shaped or tapered rear cover ribs 27r of the rear side-cover 27 in parallel with each other. Thus, the rear cover ribs 27r are internally surrounded by the front-side cover ribs 26r which form a loop closed along with the rib circular portion 26rc (see Fig. 16).

The rear end connection portion where the upper and lower wedge-shaped or tapered front cover ribs 26r meet each other is abutted against the elastic body 125 secured to the recessed portion bottom wall 27Db of the rear side-cover 27 so that the front cover ribs 26r are located at a position spaced apart by a predetermined distance from the recessed portion bottom wall 27Db. At the same time, the upper and lower lateral edges 26Ee of the extending portion 26E of the front side-cover 26 are positioned to define a cooling air intake gap 127 between the upper and lower bending edges 27De forming the recessed portion 27D of the rear side-cover 27 (see Fig. 17).
Similarly, the rear cover ribs 27r are located at a position spaced apart by a predetermined distance from the extending portion 26E of the front side-cover 26 (see Fig. 17).

Consequently, the cooling air intake gap 127 is formed to elongate along the upper and lower lateral edges 26Ee which are tapered to form an acute angle rearward of the extending portion 26E of the front side-cover 26. As shown as dashed arrows in Fig. 17, cooling air is sucked into the cooling air intake passages 126 from the corresponding cooling air intake gaps 127.
The front cover ribs 26r and the rear cover ribs 27r project into the cooling air intake passage 126 to form a labyrinth. The cooling air sucked from the cooling air intake gaps 127 are guided from the front cover ribs 26r to the corresponding rear cover ribs 27r, smoothly passing through the cooling air intake passage 126.

In this way, while being guided along the cooling air intake passage 126 by the front cover ribs 26r and the rear cover ribs 27r, the sucked cooling air is flow-guided by the flow-guide ribs 26rl in the front side-cover 26, flowing forward, and reaches the side of the filter element 120 disposed in the cooling air introducing port 24Fe of the transmission cover 24. Thus, the sucked cooling air is efficiently passed through the filter element 120 and introduced from the cooling air introducing port 24Fe into the speed-change chamber 50C.
While cooling the belt type continuously variable transmission 50, the cooling air introduced into the speed-change chamber 50C flows rearward and is discharged from the cooling air outlet passage 24y at the central lower portion of the transmission case cover 24 and from the cooling air outlet passage 24z at the rear portion thereof.

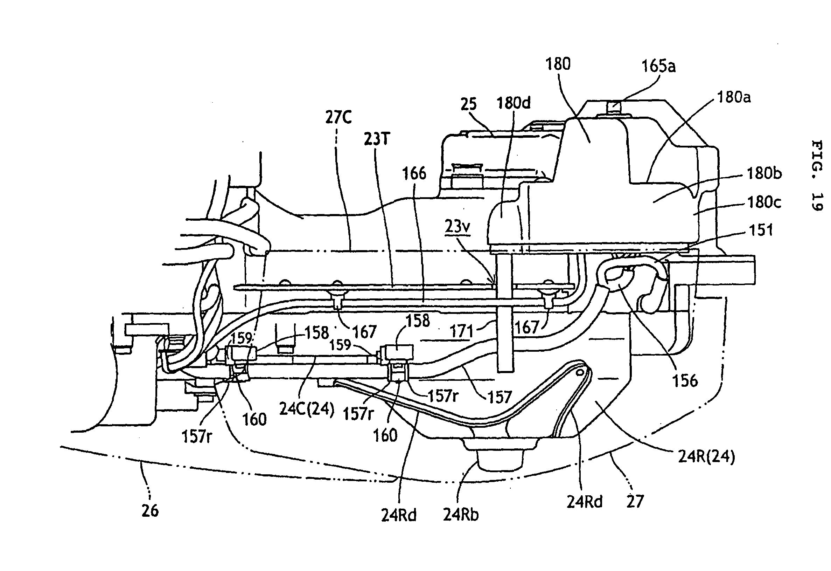

The transmission case 23 housing the belt type continuously variable transmission 50 together with the transmission case cover 24 is formed on the external surface of the upper wall with a belt-like projecting ridge 23T. The projecting ridge 23T is located at position offset slightly rightward from the mating plane 23s with the transmission case cover 24 so as to extend from the protruding portion 23e toward the rearward in the back-and-forth direction (see Figs. 4, 18 and 19).
As indicated with a two-dot chain line in Fig. 19, the circumferential wall 27C of the rear side-cover 27 which covers the transmission case cover 24 from the side covers the transmission cover 24 and further the projecting ridge 23T of the transmission case 23, and extends rightward.

The projecting ridge 23T is bored with retaining holes 23p at front and rear portions and formed with a notch 23v at a predetermined position slightly forward of the rear retaining hole 23p (see Fig. 4).
A driven pulley rotation sensor 150 is attached to the reduction gear portion 23c at the rear portion of the transmission case 23 so as to face the stationary pulley half body 81s of the driven pulley 81 (see Fig. 4).

The driven pulley rotation sensor 150 detects the rotation speed of the driven pulley 81 and provides it for the speed-change control and the like by the speed-change drive mechanism 60. A lead wire 151 extends from the driven pulley rotation sensor 150, passing through a grommet 152, and further extends to the outside. This grommet 152 is attached to a circular notch provided in a mating plane at the rear portion of the upper wall of the transmission case 23.

With reference to Fig. 5, a vehicle-speed sensor 155 is passed through and held by an attachment hole formed in the upper wall of the reduction gear portion 23c of the transmission case 23. This vehicle-speed sensor 155 passes through it toward the large-diameter gear 114a integrally fitted to the rear axle 114. The vehicle-speed sensor 155 has a detecting section at a leading end, which is close to the teeth of the large-diameter gear 114a for detecting the rotation speed or vehicle-speed of the large-diameter gear 114a (the rear axle 114).
The lead wire 156 extending from the vehicle-speed sensor 155 is bundled together with the lead wire 151 extending from the driven pulley rotation sensor 150 as a collective cable 157. The collective cable 157 extends forward along the left lateral surface of the transmission case cover 24 (see Figs. 3, 18, and 21).

Clamp attachment bosses 158 are formed to protrude in a roughly longitudinally-oblong parallelepipedic manner at upper front and rear portions of the flat left lateral surface of the connecting portion 24C. This connecting portion 24C is located between the circular wall portion 24F which is a front protruding portion and the dome wall 24R which is a rear protruding portion in the transmission case cover 24 (see Figs. 8 and 18).

The clamp attachment boss 158 is bored with a circular hole 158h at the center of a projecting surface formed in a roughly longitudinally-oblong rectangular manner. Projections 159, 159 are formed to project leftward at two upper and lower portions along the long front side of the four sides of such a rectangle.
The projections 159, 159 slightly project from the projecting surface of the clamp attachment boss 158.

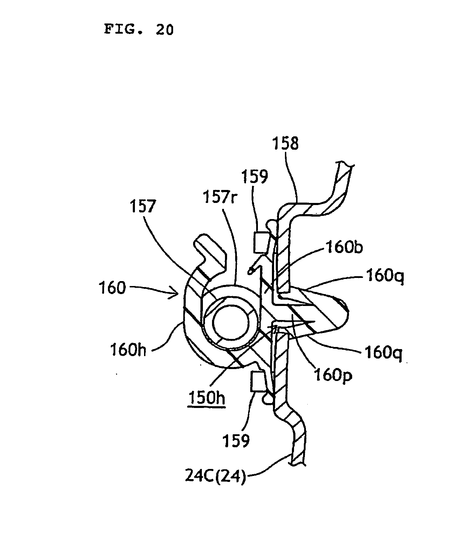

A clamp 160 is attached to the clamp attachment boss 158 by use of a circular hole 158h.
With reference to Fig. 20, the clamp 160 is made of an elastic resin and formed with a holding portion 160h. This holding portion 160h extends upward from the front surface of a rectangular-platelike clamp base 160b with its lower portion bent. A retaining projection 160p projects from the rear surface of the clamp base 160b and is formed with parasol-like locking pieces 160q.

When the retaining projection 160p of the clamp 160 passes through the circular hole 158h of the clamp attachment boss 158, the locking pieces 160q pass through the circular hole 158h to open, coming into a locking state. Thus, the clamp 160 is retained by the clamp attachment boss 158, as shown in Fig. 20.
The front side of the rectangular-platelike clamp base 160b comes into contact with upper and lower projections 159, 159 to prevent the turning of the clamp 160. Thus, the projections 159, 159 function to lock the clamp 160.

In this way, the clamp 160 which is attached to the clamp attachment boss 158 while being locked by the projections 159, 159 is kept in a posture where the holding portion 160h can hold the collective cable 157 to face the back-and-forth direction.
The clamp 160 is formed in a roughly U-shape to have a clamp base 160b and a holding portion 160h. An opening portion opening upward is narrowed in width by a projecting claw. The collective cable 157 is pressed into the opening to elastically deform the holding portion 160h, widening the opening portion. Thus, the collective cable 157 can be fitted into and held by the bent bottom portion of the holding portion 160h while being gripped between the clamp base 160b and the holding portion 160h.

Incidentally, positioning rings 157r are fitted to the collective cable 157 at both side portions in contact with the holding portion 160h of the clamp 160. Thus, if the collective cable 157 is held by the clamp 160, it cannot be moved also in the back-and-forth direction because of the positioning rings 157r on both the sides.

With such a configuration described above, the collective cable 157 which extends from the driven pulley rotation sensor 150 and the vehicle-speed sensor 155 disposed on the rear portion of the transmission case 23 are held by the two front and rear clamps 160, 160 attached to the flat left lateral surface of the connecting portion 24C which is a valley defined between the circular wall portion 24F and dome wall 24R which are front and rear protruding portions, respectively, of the transmission case cover 24. In addition, the collective cable 157 is disposed forwardly along the left lateral surface of the connecting portion 24C. Thus, even if a plurality of lead wires are assembled to increase the diameter thereof so that the clamps 160 are increased in size in some degree, they will not protrude leftward from the leftward protruding dome wall 24R.

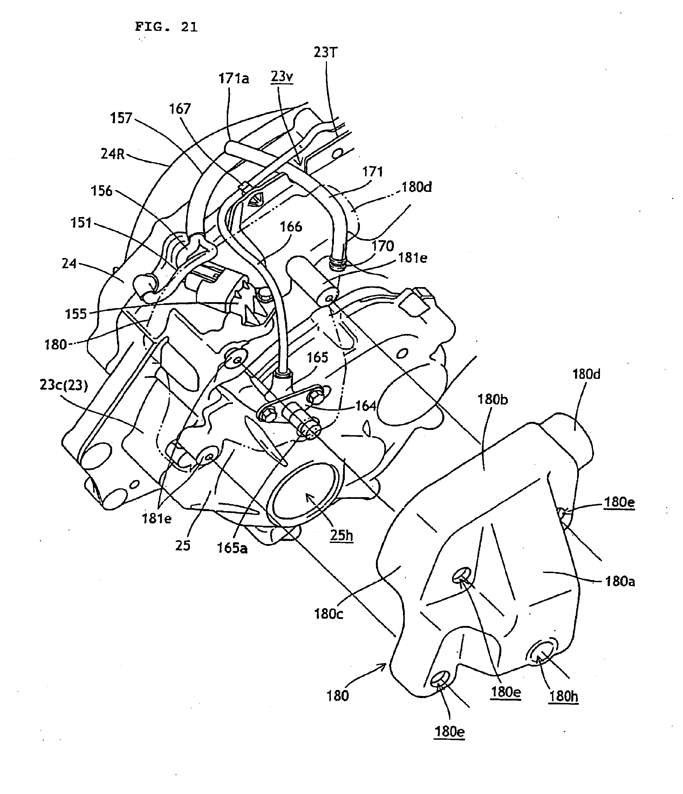

The reduction gear mechanism 110 is housed in the reduction gear portion 23c in the rear portion of the transmission case 23. The reduction gear cover 25 is mounted from the right on the reduction gear portion 23c. As shown in Fig. 21, an ABS wheel-speed sensor 165 is attached via a bracket 164 to the reduction gear cover 25 at a position above an opening 25h adapted to receive the rear axle 114 inserted and projecting therethrough.
The ABS wheel-speed sensor 165 is provided with a detecting portion 165a close to an annular plate attached to the hub of the rear wheel 17. In addition, the sensor 165 detects the wheel-speed of the rear wheel 17 and provides it for the control of an anti-lock brake system ABS.

As shown in Fig. 21, a lead wire 166 extending upward from the ABS wheel-speed sensor 165 is arranged to extend leftward above the transmission case 23, bend forward at the rear end of the projecting ridge 23T, and further extend forward along the left lateral surface of the projecting ridge 23T. The projecting ridge 23T is formed on the upper wall of the transmission case 23 to face the back-and-forth direction.
Clamps 167 provided with the same locking pieces as those of the clamp 160 described above are retained in corresponding retaining holes 23p bored in the front and rear portions of the projecting ridge 23T. The wire lead 166 is held by the front and rear clamps.

The reduction gear portion 23c of the transmission case 23 and the reduction gear cover 25 constitute the reduction gear chamber 110C for housing the reduction gear mechanism 110. A breathing connection pipe 170 is supported by the upper wall of the reduction gear portion 23c so as to pass therethrough and communicate with the reduction gear chamber 110C. A breather pipe 171 is fitted at one end to a portion of the breathing connection pipe 170 projecting to the outside (see Fig. 5).
Thus, the breather pipe 171 communicates with the reduction gear chamber 110C and extends upward via the breathing connection pipe 170.

As shown in Fig. 21, the breather pipe 171 extends upward from the reduction gear chamber 110C, bending leftward, and further extends along the upper surface of the transmission case 23. Then, the breather pipe 171 is fitted to, positioned at and passed through the notch 23v of the projecting ridge 23T formed on the upper wall of the transmission case 23 to face the back-and-forth direction, and further extends leftward along the upper surface of the transmission case cover 24.
The breather pipe 171 extending to face the left-and-right direction extends below the lead wire 166 arranged along the projecting ridge 23T to face the back-and-forth direction, and extends above the collective cable 157 arranged to also face the back-and-forth direction.

A protection cover 180 is mounted from the lateral side and upside of the reduction gear cover 25 and from the upside of the reduction gear portion 23c so as to cover the vehicle-speed sensor 155 and ABS wheel-speed sensor 165.
With reference to Fig. 21, the protection cover 180 is such that a lateral wall 180a generally bends leftward from the upper end and rear end thereof to form an upper wall 180b and a rear wall 180c. The lateral wall 180a and upper wall 180b circularly bend from their front ends to form a projecting portion 180d which projects forward.

The lateral wall 180a protrudes rightward at a central portion as a protruding portion. This protruding portion is bored at a lower portion with a circular hole 180h the detecting portion 165a of the ABS wheel-speed sensor 165 faces.
Incidentally, the lateral wall 180a is formed with three attachment holes 180e.
The transmission case 23 and reduction gear cover 25 are formed with attachment bosses 181e corresponding to the three attachment holes 180e of the protection cover 180.

The protection cover 180 is put on the reduction gear cover 25 from the side and the attachment holes 180e are fixedly attached to the attachment bosses 181e. Thus, the vehicle-speed sensor 155, the ABS wheel-speed sensor 165, and a portion of the lead wires 156 and 166 extending from the sensors 155 and 165, respectively, are covered and protected by the protection cover 180. In addition, the detecting portion 165a of the ABS wheel-speed sensor 165 faces and slightly projects from the circular hole 180h.

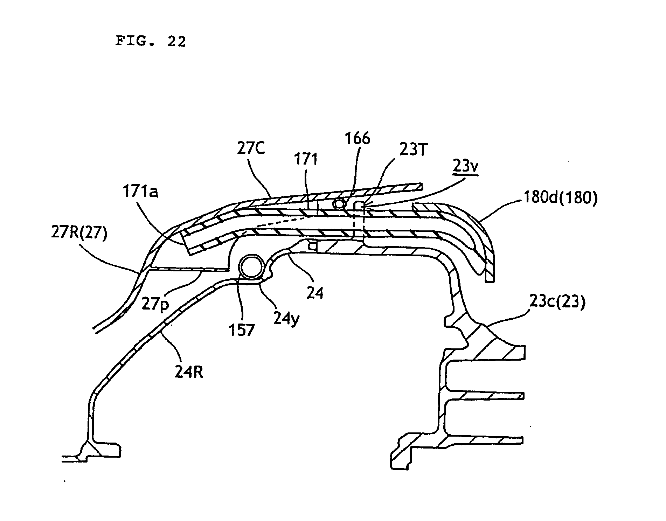

The circular projecting portion 180d projecting forward from the protection cover 180 can press from the oblique side a leftward bent portion of the breather pipe 171 extending from the reduction gear chamber 110C so as to position it in the left-right direction (see Fig. 22).
As shown in Fig. 22, the tip opening portion 171a of the breather pipe 171 is inserted into and held by an opening support portion 27p (see also Fig. 15) formed in the inside surface (the right surface) of the rear side-cover 27 when the rear side-cover 27 is put on the transmission case cover 24.

The breather pipe 171 is positioned in the left-right direction by the projecting portion 180d of the protection cover 180 and in the back-and-forth direction by the notch 23v of the projecting ridge 23T. Thus, the tip opening portion 171a of the breather pipe 171 relative to the transmission case cover 24 is kept at a predetermined position. In addition, when the rear side-cover 27 is mounted, the tip opening portion 171a of the breather pipe 171 can easily be inserted into the opening support portion 27p. This facilitates the mounting work of the side-cover 27.

As shown in Fig. 22, the collective cable 157 lies on a stepped portion 24y of the dome wall 24R protruding from the transmission case cover 24 and is put and positioned between the opening support portion 27p of the rear side-cover 27 and the transmission case cover 24.

With reference to Figs. 19 and 22, an upper portion of the circumferential wall 27C of the rear side-cover 27 covers the transmission case cover 24 and the projecting ridge 23T of the transmission case 23. In addition, the upper portion extends rightward of the projecting ridge 23T over the upper wall 180b and projecting portion 180d of the protection cover 180. Thus, the rear side-cover 27 and the protection cover 180 wholly cover the lead wires 151, 156, 166 and the collective cable 157.

A gap is defined between an upper portion of the circumferential wall 27C of the rear side-cover 27 and the upper surface of the transmission case 23 so as to open to the outside. Inside such an opening the projecting ridge 23T is provided to extend in the back and forth direction so as to block the communication between the outside and the inside of the rear side-cover 27.
The lead wire 166 extending from the ABS wheel-speed sensor 165 is arranged along the side opposite to, i.e., on the left side of, the opening of the projecting ridge 23T.

The lead wire 166 and the collective cable 157 arranged along the external lateral surface of the transmission case cover 24 extend upward along the external lateral surface of the protruding portion 24e on the front upper portion of the transmission case cover 24. On the other hand, referring to Fig. 3, a lead wire 191 extending from a hydraulic sensor 190 provided at the lower portion of the front crankcase of the transmission case 23 is arranged to extend from below around the oil filter 195 in front of the hydraulic sensor 190 and then extend upward. These lead wires 166, 157, 191 are bundled and held by a clamp 192 provided to project from the lateral surface of the protruding portion 24e.

In the power unit 20 as described above, the transmission case cover 24 which covers the belt type continuously variable transmission 50 provided on the side of the transmission case 23 is such that the dome wall 24R in the rear portion for housing the centrifugal clutch 90 is formed like a dome which is liable to cause resonance. However, the three U-shaped external ribs 24Rd are projectingly formed on the external surface to extend in the radial direction and the six internal ribs 24Rf are projectingly formed on the internal surface to extend in the radial direction. Thus, the synergetic effect of the U-shaped external ribs 24Rd and internal ribs 24Rf allows the dome wall 24R to have remarkably increased rigidity. Thus, the small number of the simple ribs can effectively suppress the resonance of the dome wall 24R to further suppress the vibration, thereby suppressing the occurrence of noise.

The U-shaped external ribs 24Rd and internal ribs 24Rf on the external and internal surfaces, respectively, of the dome wall 24R are formed not to overlap each other as viewed from the side in Fig. 8. Thus, the dome wall 24R can be sectioned more finely by the small number of the ribs to efficiently ensure rigidity.

The U-shaped external rib 24Rd on the external surface of the dome wall 24R is such that a pair of approximately parallel sides extend in the centrifugal direction with the apex of the dome wall 24R taken as the center, and bend at both tips to join together, forming a U-shape. In addition, the respective proximal ends of the adjacent U-shaped external ribs 24Rd are joined together. The three U-shaped external ribs 24Rd form the single closed loop. Thus, the small number of the ribs can more effectively increase the rigidity of the dome wall.

The three U-shaped external ribs 24Rd of the dome wall 24R are projectingly formed in an approximately radial manner so that adjacent external ribs 24Rd have an angle of about 120 degrees. Therefore, the small number of the ribs can efficiently increase the rigidity of the entire dome wall 24R. In addition, one of the three U-shaped external ribs 24Rd has a pair of sides which lie approximately parallel to the plane S containing the drive shaft (the crankshaft 40) and driven shaft 82 of the belt type continuously variable transmission 50 and are spaced equally apart from the plane S. Thus, the anteroposterior rigidity of the dome wall 24R of the transmission case cover 24 can particularly be increased. This can more effectively suppress the anteroposterior vibration resulting from the rotation of the V-belt 58 of the transmission 50.

In addition, the dome wall 24R of the transmission case cover 24 is such that two of the six internal ribs 24Rf on the internal surface thereof approximately lie on the plane containing the drive shaft (the crankshaft 40) and the driven shaft 82. Thus, the anteroposterior rigidity of the dome wall 24R can increasingly be enhanced.

Moreover, in the power unit 20 described above, the clamp 160 is attached to the clamp attachment boss 158 formed on the connection portion 24C of the transmission case cover 24 and supports the collective cable 157 of the driven pulley rotation sensor 150 and the vehicle-speed sensor 155. Thus, the collective cable 157 can be fixedly held reliably.
Since the clamps 160, 167 and the collective cable 157 and lead wire 166 held by the clamps 160 and 167, respectively, are covered by the rear side-cover 27 laterally put on the transmission case cover 24, they are hidden by the rear side-cover 27 so as to be invisible from the outside. This keeps the external appearance of the power unit 20 satisfactory.

The clamp 160 is attached to the flat connection portion 24C between the circular wall portion 24F and the dome wall 24R which are front and rear protruding portions, respectively, of the transmission case cover 24. Thus, the clamp 160 attached will not further protrude in the vehicle-width direction from the circular wall portion 24F and from the dome wall 24R. This keeps the external appearance further satisfactory.

The projections 159, 159 adapted to prevent the turning of the clamp 160 are formed to project from the periphery of the clamp attachment bosses 158 of the transmission case cover 24 so that the collective cable 157 is held to face the back and forth direction. Thus, the lock of the clamp 160 can be formed with a simple construction. In addition, since the collective cable 157 is allowed to face the back and forth direction, the length of the cable can be reduced as much as possible.

Additionally, with the breather structure of the reduction gear chamber 110C in the power unit 20 described above, since the breather pipe 171 extends upward from the reduction gear chamber 110C to the outside. Therefore, it is easy to handle the breather pipe 171.
More specifically, the breather pipe 171 can easily be positioned by being fitted to the notch 23v of the projecting ridge 23T which is formed to project from the upper surface of the transmission case 23 and face the back and forth direction. In addition, when the rear side-cover 27 is assembled, it is easy to allow the tip opening 171a of the breather pipe 171 to face the opening support portion 27p provided on the inner surface of the rear side-cover 27. Thus, the attachment work of the breather pipe 171 can extremely be facilitated.

The protection cover 180 covering the reduction gear cover 25 from the lateral side and upside thereof covers the bent portion of the breather pipe 171. Therefore, it is possible to prevent the breather pipe 171 from being pressed and deformed when the rear side-cover 27 is assembled by fixedly pressing and positioning the bent portion of the breather pipe 171 and to protect the bent portion of the breather pipe 171 with the protection cover 180.

The upper wall 27C covering the upper surface of the transmission case cover 24 of the rear side-cover 27 extends toward the transmission case 23 to cover the breather pipe 171 from above. Thus, the breather pipe 171 can entirely be covered and protected by the protection cover 180 and by the rear side-cover 27. In addition, the breather pipe 171 cannot be viewed from the outside to keep the external appearance satisfactory.

The projecting ridge 23T on the upper surface of the transmission case 23 extends forward to a portion corresponding to the crankcase. Thus, the elongate projecting ridge 23T can prevent water, mud and other foreign matter from entering between the transmission case cover 24 and the rear side-cover 27.

The lead wire 166 of the ABS wheel-speed sensor 165 attached to the transmission case 23 is supported by the projecting ridge 23T. Thus, the projecting ridge 23T has three types of functions: foreign matter entering prevention, positioning of the breather pipe 171, and support of the lead wire 166 of the ABS wheel-speed sensor 165. It is possible to reduce the number of component parts and simplify the structure.

The collective cable 157 for the auxiliaries such as the driven pulley rotation sensor 150, the vehicle-speed sensor 155, etc., attached to the transmission case 23 is put between the opening support portion 27p provided on the inner surface of the rear side-cover 27 and the transmission case cover 24. Thus, the opening support portion 27p on the inner surface of the rear side-cover 27 can be used to position the collective cable 157 for the auxiliaries, thereby reducing the number of component parts.

### Reference sign list

- 20: ..... Power unit
- 21: ..... Unit case
- 22: ..... Right unit case
- 23: ..... Transmission case
- 23c: .... Reduction gear portion
- 23T: .... Projecting ridge
- 23v: .... Notch
- 24: ..... Transmission case cover
- 24C: .... Connection portion
- 24F: .... Circular wall portion
- 24Fa: ... Annular bearing portion
- 24Fb: ... Protruding wall
- 24R: .... Dome wall
- 24Rb: ... Protruding wall
- 24Rc: ... Breathing hole
- 24Rd: ... U-shaped external rib
- 24Rf: ... Internal rib
- 24z: .... Cooling air outlet passage
- 25: ..... Reduction gear cover
- 26: ..... Front side-cover
- 27: ..... Rear side-cover
- 27C: .... Upper wall
- 27p: .... Opening support portion
- 30: ..... Internal combustion engine
- 40: ..... Crankshaft
- 50: ..... Belt type continuously variable transmission
- 50C: .... Speed-change chamber
- 51: ..... Drive pulley
- 58: ..... V-belt
- 81: ..... Driven pulley
- 82: ..... Driven shaft
- 90: ..... Centrifugal clutch
- 110: .... Reduction gear mechanism
- 114: .... Rear axle
- 150: .... Driven pulley rotation sensor
- 151: .... Lead wire
- 155: .... Vehicle-speed sensor
- 156: .... Lead wire
- 157: .... Collective cable
- 158: .... Clamp attachment boss
- 159: .... Projection
- 160: .... Clamp
- 165: .... ABS wheel-speed sensor
- 166: .... Lead wire
- 167: .... Clamp
- 170: .... Breathing connection pipe
- 171: .... Breather pipe
- 180: .... Protection cover

## Claims

1. A power unit for a motorcycle (1) having a transmission case cover (24), the power unit (20) in which a belt type continuously variable transmission (50) is provided between a portion (23b) of a transmission case (23) and the transmission case cover (24) extending rearward and also having a crankcase rotatably journaling a crankshaft (40) of an internal combustion engine (30) and the transmission case cover (24) is put on the transmission case (23) from a side to cover the portion (23b) of the transmission case (23) from a front drive pulley (51) to a rear driven pulley (81) of the belt type continuously variable transmission (50) to form a speed-change chamber (50C),
and in which a centrifugal clutch (90) is rotatably carried by a driven shaft (82) axially outwardly of the driven pulley (81) rotatably carried by the driven shaft (82), and
the transmission case cover (24) is formed in a rear portion thereof with a dome wall (24R) which protrudes like a dome so as to house the centrifugal clutch (90),
**characterized in that** external ribs (24Rd) and internal ribs (24Rf) are projectingly formed on the external surface and internal surface, respectively, of the dome wall (24R) to extend in an approximately radial manner with an apex of the dome wall (24R) taken as a center.

2. The power unit according to claim 1,
wherein the external ribs (24Rd) and the internal ribs (24Rf) are formed not to overlap each other as viewed from the side.

3. The power unit according to claim 1 or 2,
wherein the external ribs (24Rd) are formed approximately parallel to a plane containing a drive shaft and the driven shaft (82) of the belt type continuously variable transmission (50).

4. The power unit according to any one of claims 1 to 3,
wherein each external rib (24Rd) is formed in a U-shape where a pair of approximately parallel sides extend in a radial direction with the apex of the dome wall (24R) taken as a center and bend at tips to join together, and
respective proximal ends of adjacent U-shaped external ribs (24Rd) join together, thus, the plurality of external ribs forms a single closed loop.

5. The power unit according to claim 4,
wherein three of the U-shaped external ribs (24Rd) are projectingly formed so that adjacent U-shaped external ribs (24Rd) have an angle of about 120 degrees, and
one of the three U-shaped external ribs (24Rd) has a pair of sides that are approximately parallel to the plane containing the drive shaft and driven shaft (82) of the belt type continuously variable transmission (50) and are equally spaced apart from the plane.

6. The power unit according to any of the preceding claims, further comprising a wiring structure for said power unit (20) swingably provided in a motorcycle,
wherein clamps (160, 167) are attached to an external surface of the transmission case cover (24),
lead wires (157, 166) extending from auxiliaries are held by the clamps (160, 167), and
the clamps (160, 167) and the lead wires (157, 166) held by the respective clamps (160, 167) are covered by a side-cover (27) laterally put on the transmission case cover (24).

7. The power unit according to claim 6,
wherein the transmission case cover (24) which covers the belt type continuously variable transmission (50) has respective portions which correspond to the drive pulley (51) and the driven pulley (81) of the belt type continuously variable transmission (50) and which outwardly protrude to form a front protruding portion (24F) and the dome wall (24R), and
the clamps (160) are attached to a flat connection portion (24C) between the front protruding portion (24F) and the dome wall (24R) of the transmission case cover (24).

8. The power unit according to claim 6 or 7,
wherein a projection (159) which prevents turning of the clamp (160) is formed to project from a periphery of a clamp attachment portion (158) of the transmission case cover (24) to which the clamp (160) is attached so that the lead wire (157) is held to face the back and forth direction.

9. A motorcycle comprising a power unit according to any one of the preceding claims.

## Patentansprüche

1. Antrieb für ein Kraftrad (1) mit einer Getriebegehäuse-Abdeckung (24), wobei
der Antrieb (20), in dem ein stufenloses Treibriemen-Getriebe (50) zwischen einem Bereich (23b) eines Getriebegehäuses (23) und der Getriebegehäuse-Abdeckung (24) angeordnet ist, sich rückwärtig erstreckt und ein Kurbelgehäuse aufweist, welches drehbar eine Kurbelwelle (40) eines Verbrennungsmotors (30) lagert, und
die Getriebegehäuse-Abdeckung (24) auf dem Getriebegehäuse (23) von einer Seite aufgebracht ist um den Bereich (23b) des Getriebegehäuses (23) von einem vorderen Antriebsrad (51) bis zu einem hinteren angetriebenen Rad (81) des stufenlosen Treibriemen-Getriebes (50) abzudecken um einen Gangwechsel-Raum (50C) auszubilden,
und in dem eine Fliehkraft-Kupplung (90) axial äußerlich von dem angetriebenen Rad (81), das von einer angetriebenen Welle (82) drehbar getragen wird, von der angetriebenen Welle (82) drehbar getragen wird.
die Getriebegehäuse-Abdeckung (24)in einem hinteren Bereich davon mit einer kuppelförmigen Wand (24R) ausgebildet ist, welche wie eine Kuppel herausragt um die Fliehkraft-Kupplung (90) aufzunehmen,
**dadurch gekennzeichnet,**
**dass** außen liegende Rippen (24Rd) und innen liegende Rippen (24Rf) jeweils auf der äußeren Seite bzw. der inneren Seite der kuppelförmigen Wand (24R) vorstehend ausgebildet sind, um sich in eine näherungsweise radiale Weise mit einem Scheitel der kuppelförmigen Bewandung (24R) als Mittelpunkt zu erstrecken.

2. Antrieb nach Anspruch 1,
**dadurch gekennzeichnet**,
die außen liegenden Rippen (24Rd) und die innen liegenden Rippen (24Rf) derart ausgebildet sind, dass sie aus seitlicher Sicht nicht überlappen.

3. Antrieb nach Anspruch 1 oder 2,
**dadurch gekennzeichnet**,
die außen liegenden Rippen (24Rd) näherungsweise parallel zu einer Ebene ausgebildet sind, welche eine Antriebswelle und die angetriebenen Welle (82) des stufenlosen Treibriemen-Getriebes (50) enthält.

4. Antrieb nach einem der Ansprüche 1 bis 3,
**dadurch gekennzeichnet**,
jede außen liegende Rippe (24Rd) U-förmig ausgebildet ist, wobei ein Paar näherungsweise paralleler Seiten sich in radialer Richtung mit dem Scheitel der kuppelförmigen Wand (24R) als Mittelpunkt erstrecken und sich an Spitzen biegen um zusammen zu finden und
dass jeweils nahe gelegene Enden angrenzender U-förmiger externer Rippen (24Rd) derart zusammen finden, dass die Mehrzahl von außen liegenden Rippen eine einzelne geschlossene Schleife bildet.

5. Antrieb nach Anspruch 4,
**dadurch gekennzeichnet**,
drei der U-förmigen außen liegenden Rippen (24Rd) derart vorstehend ausgebildet sind, dass benachbarte U-förmige außen liegende Rippen (24Rd) einen Winkel von etwa 120° bilden, und
einer der drei U-förmigen außen liegenden Rippen (24Rd) ein Paar Seiten hat, welche näherungsweise parallel zu der Ebene ausgebildet sind, welche die Antriebswelle und die angetriebenen Welle (82) des stufenlosen Treibriemen-Getriebes (50) enthält, und welche von der Ebene gleich beabstandet sind.

6. Antrieb nach einem der vorhergehenden Ansprüche,
ferner aufweisend
eine Verkabelungsstruktur für den schaukelfähig in dem Kraftrad (1) vorgesehenen Antrieb (20),
wobei Klammern (160, 167) an einer äußeren Oberfläche der Getriebegehäuse-Abdeckung (24) befestigt sind,
von Hilfseinrichtungen herausragende Kabel (157, 166) durch die Klammern (160, 167) gehalten werden, und
die Klammern (160, 167) und die durch die jeweiligen Klammern (160, 167) gehaltenen Kabel (157, 166) durch eine Seiten-Abdeckung (27) bedeckt werden, welche seitlich auf der Getriebegehäuse-Abdeckung (24) angeordnet ist.

7. Antrieb nach Anspruch 6,
**dadurch gekennzeichnet**,
die Getriebegehäuse-Abdeckung (24), welche das stufenlose Treibriemen-Getriebe (50) abdeckt, jeweilige Bereiche hat, welche dem Antriebsrad (51) und dem angetriebenen Rad (81) des stufenlosen Treibriemen-Getriebes (50) entsprechen und nach außen hervorstehen, um einen vorderen hervorstehenden Bereich (24F) und die kuppelförmige Wand (24R) zu bilden, und
die Klammern (160) an einem flachen Verbindungs-Bereich (24C) zwischen dem vorderen hervorstehenden Bereich (24F) und der kuppelförmigen Bewandung (24R) der Getriebegehäuse-Abdeckung (24) befestigt sind.

8. Antrieb nach Anspruch 6 oder 7,
**dadurch gekennzeichnet**,
ein Vorsprung (159), der ein Drehen der Klammer (160) verhindert, ausgebildet ist, um von einer Begrenzungsfläche eines Klammerbefestigungsbereichs (158) der Getriebegehäuse-Abdeckung (24), an der die Klammer (160) so befestigt ist, dass das Kabel (157) in einer vor- und-zurück-Richtung gehalten wird, hervorzustehen.

9. Kraftrad umfassend einen Antrieb nach einem der vorhergehenden Ansprüche.

## Revendications

1. Bloc d'alimentation pour une motocyclette (1) comprenant un couvercle de carter de boîte de vitesses (24), bloc d'alimentation (20) dans lequel une transmission variable continûment du type à courroie (50) est disposée entre une partie (23b) d'un carter de boîte de vitesses (23) et le couvercle de carter de boîte de vitesses (24) s'étendant vers l'arrière et comprenant également un carter de moteur supportant de manière rotative un vilebrequin (40) d'un moteur à combustion interne (30) et le couvercle de carter de boîte de vitesses (24) est placé sur le carter de boîte de vitesses (23) depuis un côté pour couvrir la partie (23b) du carter de boîte de vitesses (23) depuis une poulie d'entraînement frontale (51) à une poulie entraînée arrière (81) de la transmission variable continûment du type à courroie (50) pour former une chambre de changement de vitesses (50C),
et dans lequel un embrayage centrifuge (90) est supporté de manière rotative par un arbre entraîné (82) axialement vers l'extérieur de la poulie entraînée (81) supportée de manière rotative par l'arbre entraîné (82), et
le couvercle de carter de boîte de vitesses (24) est formé dans une partie arrière de celui-ci d'une paroi de dôme (24R) saillante comme un dôme de façon à contenir l'embrayage centrifuge (90),
**caractérisé en ce que** des nervures extérieures (24Rd) et des nervures intérieures (24Rf) sont formées de façon saillante sur la surface extérieure et la surface intérieure, respectivement, de la paroi de dôme (24R) pour s'étendre de manière approximativement radiale avec un sommet de la paroi de dôme (24R) pris comme un centre.

2. Bloc d'alimentation selon la revendication 1,
dans lequel les nervures extérieures (24Rd) et les nervures intérieures (24Rf) sont formées de manière à ne pas se chevaucher les unes les autres vues de côté.

3. Bloc d'alimentation selon la revendication 1 ou 2,
dans lequel les nervures extérieures (24Rd) sont formées approximativement parallèles à un plan contenant un arbre d'entraînement et l'arbre entraîné (82) de la transmission variable continûment du type à courroie (50).

4. Bloc d'alimentation selon l'une quelconque des revendications 1 à 3,
dans lequel chaque nervure extérieure (24Rd) est en forme de U, une paire de côtés approximativement parallèles s'étendant dans une direction radiale avec le sommet de la paroi de dôme (24R) pris comme un centre et étant courbés aux extrémités pour se rejoindre, et
les extrémités proximales respectives des nervures extérieures (24Rd) en U adjacentes se rejoignent, la pluralité de nervures extérieures formant ainsi une seule boucle fermée.

5. Bloc d'alimentation selon la revendication 4,
dans lequel trois des nervures extérieures (24Rd) en U sont formées de manière saillante de telle sorte que les nervures extérieures (24Rd) en U adjacentes aient un angle d'environ 120 degrés, et
une des trois nervures extérieures (24Rd) en U comporte une paire de côtés qui sont approximativement parallèles au plan contenant l'arbre d'entraînement et l'arbre entraîné (82) de la transmission variable continûment du type à courroie (50) et sont espacés de façon égale du plan.

6. Bloc d'alimentation selon l'une quelconque des revendications précédentes, comprenant également une structure de câblage pour ledit bloc d'alimentation (20) disposée de manière oscillante dans une motocyclette,
dans lequel des colliers de serrage (160, 167) sont fixés à une surface extérieure du couvercle de carter de boîte de vitesses (24),
des fils de sortie (157, 166) s'étendant depuis les auxiliaires sont maintenus par les colliers de serrage (160, 167), et
les colliers de serrage (160, 167) et les fils de sortie (157, 166) maintenus par les colliers de serrage (160, 167) respectifs sont couverts par un couvercle latéral (27) placé latéralement sur le couvercle de carter de boîte de vitesses (24).

7. Bloc d'alimentation selon la revendication 6,
dans lequel le couvercle de carter de boîte de vitesses (24) qui couvre la transmission variable continûment du type à courroie (50) comporte des parties respectives correspondant à la poulie d'entraînement (51) et la poulie entraînée (81) de la transmission variable continûment du type à courroie (50) et saillantes vers l'extérieur pour former une partie saillante frontale (24F) et la paroi de dôme (24R), et
les colliers de serrage (160) sont fixés à une partie de raccordement plate (24C) entre la partie saillante frontale (24F) et la paroi de dôme (24R) du couvercle de carter de boîte de vitesses (24).

8. Bloc d'alimentation selon la revendication 6 ou 7,
dans lequel une saillie (159) empêchant la rotation du collier de serrage (160) est formée pour être en saillie depuis une périphérie d'une partie de fixation de collier de serrage (158) du couvercle de carter de boîte de vitesses (24) auquel le collier de serrage (160) est fixé, de telle sorte que le fil de sortie (157) soit maintenu pour être orienté face à la direction vers l'avant et vers l'arrière.

9. Motocyclette comprenant un bloc d'alimentation selon l'une quelconque des revendications précédentes.
